# EUROPEAN PATENT APPLICATION

(11) **EP 4 748 699 A1**
(43) Date of publication of application: **27.05.2026**
(21) Application number: 25204655.2
(22) Date of filing: 25.09.2025
(51) Int. Cl.: B63B 79/40, B63H 9/02, B63H 21/20

(54) **CONTROL SYSTEM AND SHIP**

(30) Priority: 20.11.2024 JP 2024202480
(71) Applicant: Sumitomo Heavy Industries Marine & Engineering Co., Ltd., Tokyo 141-6025 (JP)
(72) Inventor: KUSAKAWA, Kahori, Kanagawa, 237-8555, (JP); AONO, Takeshi, Kanagawa, 237-8555, (JP)
(74) Representative: Louis Pöhlau Lohrentz

(57) **Abstract**

Provided are a control system (100) and a ship (1) which can easily switch a navigation mode. The control system (100) controls a ship (1). As a navigation mode of the ship (1), the control system (100) includes an engine-powered driving mode in which the ship (1) is propelled only by a propulsor (12), an engine/sail-powered driving mode in which the ship (1) is propelled by the propulsor (12) and a wind power propulsion unit (10), and a sail-powered driving mode in which the ship (1) is propelled by the wind power propulsion unit (10). In contrast, the control system (100) automatically switches among the engine-powered driving mode, the engine/sail-powered driving mode, and the sail-powered driving mode. Therefore, regardless of the skills of the crews, the control system (100) can automatically switch the navigation mode at a proper timing or with a proper operation. According to the above-described configuration, the navigation mode can be easily switched.

## Description

### BACKGROUND OF THE INVENTION

### Field of the Invention

The present invention relates to a control system and a ship.

### Description of Related Art

In recent years, ships are known which generate a thrust to reduce greenhouse gases such as CO₂ by using renewable energy such as wind power. For example, in a case of a ship disclosed in Japanese Unexamined Patent Publication No, 2020-45018, in addition to a propulsor using a propeller, the ship includes a wind power propulsion unit that propels a hull by using the wind power, on the hull.

### SUMMARY OF THE INVENTION

Here, in some cases, the ship as described above may have an engine-powered driving mode in which the ship is propelled only by the propulsor, an engine/sail-powered driving mode in which the ship is propelled by the propulsor and a sail, and a sail-powered driving mode in which the ship is propelled by the sail. However, in order to switch a navigation mode, it is necessary to change operation modes of various devices, and there is a problem in that a crew has difficulties in an operation for switching the navigation mode.

The present invention has been made to solve the above-described problem, and an object of the present invention is to provide a control system and a ship which can easily switch a navigation mode.

According to the present invention, there is provided a control system that controls a ship. As a navigation mode of the ship, the control system includes an engine-powered driving mode in which the ship is propelled only by a propulsor, an engine/sail-powered driving mode in which the ship is propelled by the propulsor and a wind power propulsion unit, and a sail-powered driving mode in which the ship is propelled by the wind power propulsion unit. The control system automatically switches among the engine-powered driving mode, the engine/sail-powered driving mode, and the sail-powered driving mode.

According to the present invention, there is provided a control system that controls a ship. As a navigation mode of the ship, the control system includes an engine-powered driving mode in which the ship is propelled only by a propulsor, an engine/sail-powered driving mode in which the ship is propelled by the propulsor and a sail, and a sail-powered driving mode in which the ship is propelled by the sail. In contrast, the control system automatically switches among the engine-powered driving mode, the engine/sail-powered driving mode, and the sail-powered driving mode. Therefore, regardless of the skills of the crews, the control system can automatically switch the navigation mode at a proper timing or with a proper operation. According to the above-described configuration, the navigation mode can be easily switched.

The control system may automatically switch among the engine-powered driving mode, the engine/sail-powered driving mode, and the sail-powered driving mode, based on a wind condition (for example, a wind speed, a wind direction, wind power, and the like). In this manner, the control system can automatically switch the navigation mode to a proper mode in accordance with the wind condition.

As the sail-powered driving mode, the control system may include a first sail-powered driving mode in which a fossil fuel is not used as driving energy, and a second sail-powered driving mode in which the fossil fuel is used as the driving energy. In this case, the control system can switch between the first sail-powered driving mode for environmental conservation and the second sail-powered driving mode for easy sailing, in accordance with a situation. Specifically, the second sail-powered driving mode is used for the sail-powered driving mode using the fossil fuel. Therefore, sail-powered driving and engine/sail-powered driving can be performed while wind power is used. Therefore, the ship can arrive at a destination earlier than in the first sail-powered driving mode. In the first sail-powered driving mode, the ship is propelled by using renewable energy such as electric power regenerated by the propeller. Therefore, the amount of carbon dioxide emission further decreases as much as the amount of the fossil fuel which is not used. Since the control system includes the first sail-powered driving mode and the second sail-powered driving mode in the sail-powered driving mode, the sail-powered driving mode can be switched in accordance with a situation even in a mode in which the carbon dioxide emission is small.

As a switching mode for switching the navigation mode, the control system may include an automatic mode for automatically switching the navigation mode, a manual mode for manually switching the navigation mode, an external input mode for switching the navigation mode in conjunction with an external system, and an emergency mode for forcibly switching the navigation mode to a manual engine-powered driving mode. In this manner, the control system enables sailing satisfying requests of crews, and enables improved safety sailing.

An automatic lamp may be switched in the sail-powered driving mode. In this case, it is possible to identify that the navigation mode is the sail-powered driving mode by using the automatic lamp, during the sail-powered driving mode in which the crew is less likely to control a traveling direction, compared to the engine-powered driving mode.

The control system may restrict the sail-powered driving mode under a predetermined condition. In this case, since the crew is less likely to control the traveling direction in the sail-powered driving mode, compared to the engine-powered driving mode, safety can be improved by avoiding the sail-powered driving mode under conditions in which the sailing is preferable in the engine-powered driving mode or the engine/sail-powered driving mode in order to ensure the safety.

According to the present invention, there is provided a ship including the above-described control system.

According to the ship, it is possible to obtain the same operational effects as those of the above-described control system.

According to the present invention, there are provided a control system and a ship which can easily switch a navigation mode.

### BRIEF DESCRIPTION OF THE DRAWINGS

FIG. 1 is a schematic sectional view showing an example of a ship according to an embodiment of the present invention.
FIG. 2A is a diagram for describing a principle of a rotor sail, and FIG. 2B is a plan view of the ship.
FIG. 3 is a schematic side view of a structure on a stern side of the ship.
FIG. 4 is a conceptual diagram showing a mechanism related to energy exchange of a hull in a control system of the ship.
FIG. 5 is a block diagram showing a system configuration of the control system.
FIGS. 6A and 6B are model diagrams showing an operation status of the ship.
FIGS. 7A and 7B are model diagrams showing an operation status of the ship.
FIGS. 8A and 8B are model diagrams showing an operation status of the ship.
FIG. 9 is a model diagram showing an operation status of the ship.
FIGS. 10A and 10B are model diagrams showing an operation status of the ship.
FIGS. 11A and 11B are model diagrams showing an operation status of the ship.
FIG. 12 is a model diagram showing an operation status of the ship.
FIGS. 13A and 13B are model diagrams showing an operation status of a ship.
FIGS. 14A and 14B are model diagrams showing an operation status of the ship.
FIG. 15 is a model diagram showing an operation status of the ship.
FIGS. 16A and 16B are model diagrams showing an operation status of the ship.
FIGS. 17A and 17B are model diagrams showing an operation status of the ship.
FIG. 18 is a table showing a relationship between a wind condition and a navigation mode.
FIG. 19 is a table showing suitability of each navigation mode for each wind direction and wind speed.
FIG. 20 is a table showing a relationship between the navigation mode and an operation status of each of devices 63.
FIG. 21 is a conceptual diagram showing contents of a first switching pattern, as an example of a switching pattern of the navigation mode.
FIG. 22 is a conceptual diagram showing contents of a second switching pattern as an example of the switching pattern of the navigation mode.
FIGS. 23A to 23E are graphs showing an example of output sharing between a propeller of a propulsor and a rotor sail of a wind power propulsion unit in a request mode.
FIG. 24 is a diagram showing an example of a display screen of a display unit used as an operation touch panel.
FIG. 25 is a diagram showing an example of a display screen of the display unit used as the operation touch panel.
FIG. 26 is a diagram showing a state determined by an automatic identification device.
FIG. 27 is a flowchart showing switching contents of the navigation mode.
FIG. 28 is a flowchart showing switching contents of the navigation mode.
FIG. 29 is a flowchart showing switching contents of the navigation mode.
FIG. 30 is a flowchart showing switching contents of the navigation mode.
FIG. 31 is a flowchart showing switching contents of the navigation mode.
FIG. 32 is a flowchart showing switching contents of the navigation mode.

### DETAILED DESCRIPTION OF THE INVENTION

Hereinafter, preferred embodiments of the present invention will be described with reference to the drawings. In the following description, terms "front" and "rear" correspond to a bow-stern direction of a hull, a term "lateral" corresponds to a left-right (width) direction of the hull, and terms "upper" and "lower" correspond to a vertical direction of the hull.

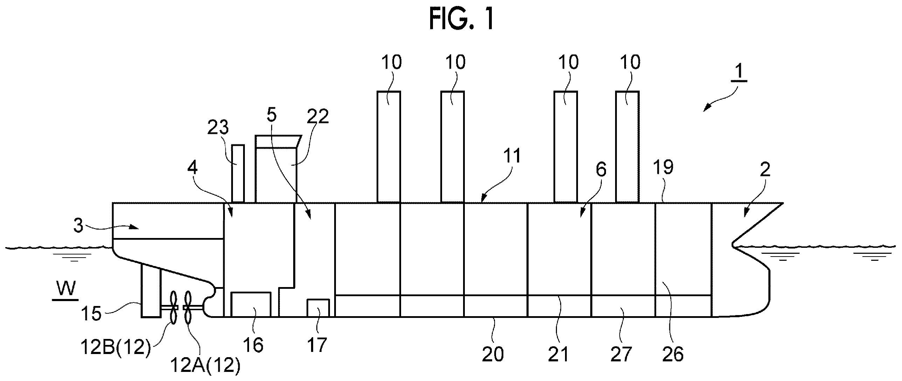

FIG. 1 is a schematic sectional view showing an example of a ship according to an embodiment of the present invention. For example, a ship 1 carries a petroleum-based liquid cargo such as crude oil or liquid gas, and is an oil tanker, for example. The ship is not limited to the oil tanker, and may be a bulk carrier, an automobile carrier, or other various types of ships, for example.

As shown in FIG. 1, the ship 1 includes a hull 11, a propulsor 12, and a plurality of wind power propulsion units 10. The hull 11 includes a bow section 2, a stern section 3, an engine compartment 4, a pump compartment 5, and a cargo compartment 6. An upper deck 19 is provided in an upper part of the hull 11 (or inside the ship). The bow section 2 is located on a front side of the hull 11. The stern section 3 is located on a rear side of the hull 11.

For example, the bow section 2 has a shape which aims to reduce wave-making resistance in a state of full-load draft. The propulsor 12 mechanically generates thrust of the hull 11, and for example, a propeller is used. The propulsor 12 is installed below a draft line (water level of a sea W) in the stern section 3 during propulsion. In addition, an azimuth propulsor 15 that serves as a rudder function for adjusting a propulsion direction is installed below the draft line in the stern section 3. In an example shown in FIG. 1, the ship 1 includes a plurality of propulsors 12A and 12B. The plurality of propulsors 12A and 12B are disposed to face each other in a front-rear direction.

The engine compartment 4 is provided at a position adjacent to a bow side of the stern section 3. The engine compartment 4 is a division for disposing a main engine 16 for applying a driving force to the propulsor 12 (propulsor 12A on a front side). On the upper deck 19, a living area 22 and an exhaust chimney 23 are provided above the engine compartment 4. The pump compartment 5 is provided at a position adjacent to the bow side of the engine compartment 4. The pump compartment 5 is a division in which a pump 17 or the like is disposed. The cargo compartment 6 is provided between the bow section 2 and the pump compartment 5. The cargo compartment 6 is a division for accommodating a petroleum-based cargo. The cargo compartment 6 is divided into a plurality of cargo oil tanks 26 and a plurality of ballast tanks 27 by adopting a double hull structure including an outer plate 20 and an inner bottom plate 21. The petroleum-based cargo carried by the ship 1 is loaded in the cargo oil tank 26. The ballast tank 27 accommodates the amount of ballast water corresponding to a size or the like of the ship.

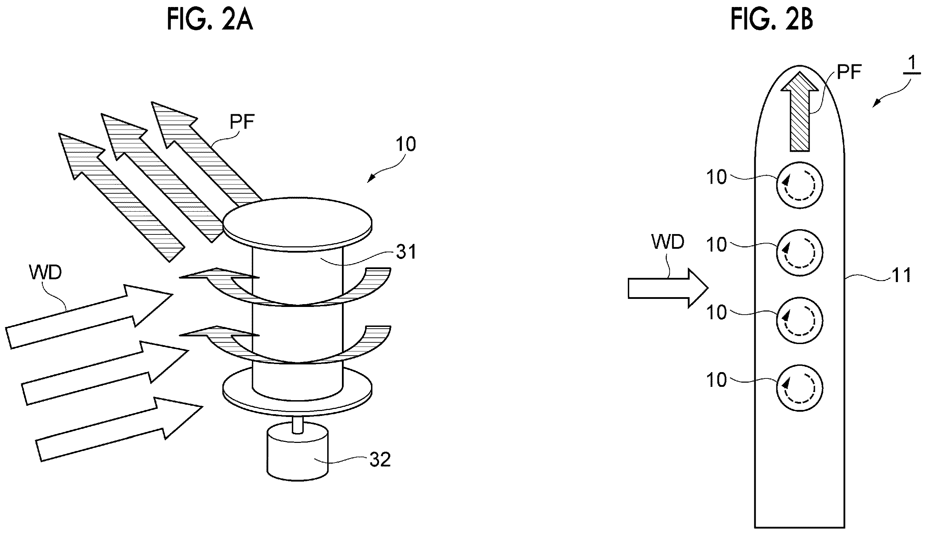

The wind power propulsion unit 10 is a mechanism for propelling the hull 11 by using wind power. In the present embodiment, a Magnus rotor type wind power propulsion mechanism is adopted as the wind power propulsion unit 10. A plurality (here, four) of the wind power propulsion units 10 are provided on the upper deck 19 of the hull 11 to be aligned in the front-rear direction. As shown in FIG. 2A, the wind power propulsion unit 10 includes a columnar rotor sail 31 extending in an up-down direction, and an electric motor 32 that rotates the rotor sail 31. When a wind WD is blown to the rotor sail 31 from a lateral side, a rotation direction of the rotor sail 31 and a direction of the wind WD are opposite to each other on a rear side, and the rotation direction of the rotor sail 31 and the direction of the wind WD coincide with each other on a front side. In this manner, a pressure difference is generated between the front side and the rear side of the rotor sail 31 to generate thrust PF directed to the front side (Magnus effect). As shown in FIG. 2B, as the wind WD blows from the lateral side to the hull 11, the hull 11 moves forward due to the thrust PF of each of the wind power propulsion units 10. As shown in FIG. 1, the rotor sail 31 which is the wind power propulsion unit 10 may be provided on a wall portion of the cargo compartment 6. In this manner, even when a structure having a large weight such as the rotor sail 31 needs to be supported, the rotor sail 31 is provided on the wall portion of the cargo compartment 6. Thus, this configuration can play a role as a reinforcing member that supports the rotor sail 31.

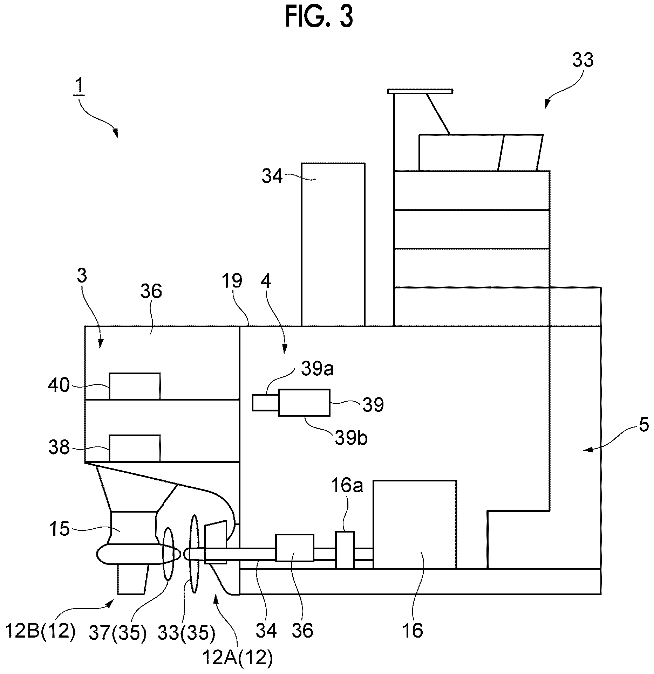

A structure on a stern side of the ship 1 will be described in detail with reference to FIG. 3. FIG. 3 is a schematic side view of the structure on the stern side of the ship 1. The plurality of propulsors 12 of the ship 1 are configured to include a counter-rotating propeller 35. The propulsor 12A on the front side includes a front propeller 33 attached to the hull 11 and driven by the main engine 16. The propulsor 12A is connected to the main engine 16 inside the engine compartment 4 via a shaft 34 extending forward from a front end portion. An electric motor 36 that recovers electric power from a rotation force of the shaft is provided at an intermediate position of the shaft 34. A clutch 16a is provided in the shaft 34 between the main engine 16 and the electric motor 36. The propulsor 12B on a rear side includes a rear propeller 37 attached to the outside of the hull 11 to be capable of turning, disposed to face the front propeller 33, and driven by the electric motor 38. The rear propeller 37 is attached to the azimuth propulsor 15 that serves as the rudder function. The propulsor 12B on the rear side adopts an azimuth propulsor to which the rear propeller 37 is attached to a pod that is rotatable 360° in a horizontal direction. In the counter-rotating propeller 35, the rotation direction of the front propeller 33 and the rotation direction of the rear propeller 37 opposite to each other. The counter-rotating propeller 35 rectifies energy of a rotating flow of the front propeller 33 into an axial flow by recovering the energy of the rotating flow of the front propeller 33 with the rear propeller 37, removes an energy loss caused by the rotating flow, and leaves only the axial flow on the rear side. In this manner, energy efficiency can be improved. A diesel generator 39 is provided in the engine compartment 4. The generator 39 includes an electric motor 39a and an engine 39b. For example, a battery 40 is provided in the stern section 3.

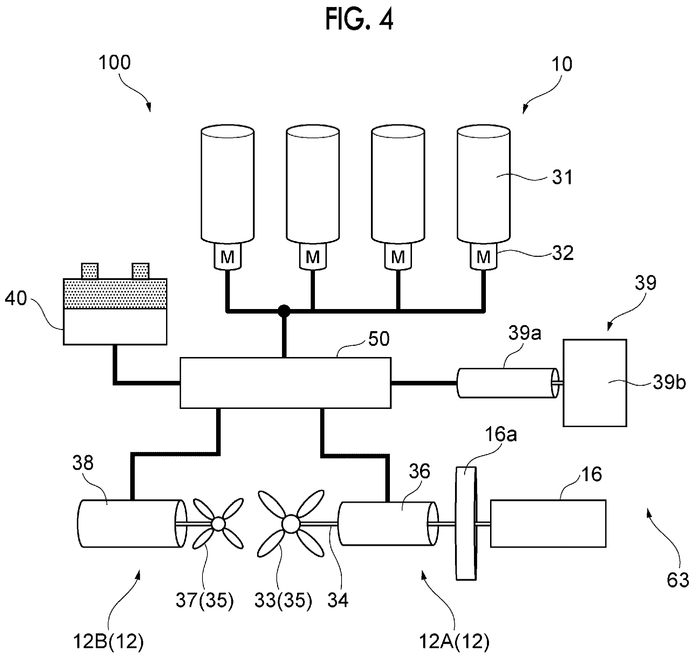

FIG. 4 is a conceptual diagram showing a mechanism related to energy exchange of the hull 11 in a control system 100 of the ship 1. The control system 100 controls the wind power propulsion unit 10 and the propulsors 12A and 12B in accordance with an obtained wind power situation. In addition, the control system 100 may use the propulsor 12 for regeneration when the wind power propulsion unit 10 moves the hull 11. As shown in FIG. 4, the control system 100 includes the wind power propulsion unit 10 (rotor sail 31 and electric motor 32) described above, the propulsor 12A (main engine 16, electric motor 36, front propeller 33, and shaft 34) on the front side, the propulsor 12B (electric motor 38 and rear propeller 37) on the rear side, the generator 39, and the battery 40. In addition, the control system 100 includes a management system 50 that manages energy of each of the above-described devices. The management system 50 exchanges or distributes a current inside the control system 100.

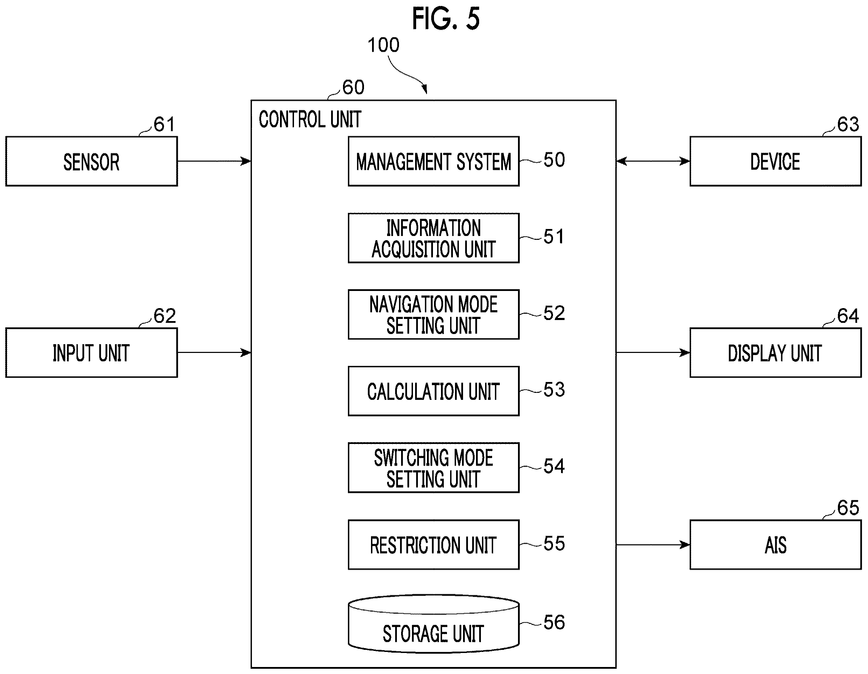

A system configuration of the control system 100 will be described in more detail with reference to FIG. 5.

FIG. 5 is a block diagram showing the system configuration of the control system 100. As shown in FIG. 5, the ship 1 includes a control unit 60. For example, the control unit 60 is configured to include a computer system. For example, the computer system physically includes a processor (calculation circuit), a memory, a communication interface, and a data storage unit. For example, the memory includes a read only memory (ROM) and a random access memory (RAM). For example, the data storage unit includes a hard disk drive (HDD) or a solid state drive (SSD). For example, the control unit 60 may be configured to include a microcontroller or an integrated circuit.

For example, the control unit 60 performs various calculation processes by causing a CPU to execute a program stored in a memory. Through this process, the control unit 60 includes functional elements shown in FIG. 5. That is, the control unit 60 includes the above-described management system 50, an information acquisition unit 51, a navigation mode setting unit 52, a calculation unit 53, a switching mode setting unit 54, a restriction unit 55, and a storage unit 56. The control unit 60 detects detection information from a sensor 61. The sensor 61 detects various information including environmental information. For example, the sensor 61 detects at least a wind direction of the wind WD (refer to FIG. 2B) and a wind speed. In addition, the sensor 61 detects a sea condition. In addition, the sensor 61 detects position information, a bow direction, a rotation speed of the front propeller 33 or the rear propeller 37, a rudder angle of the azimuth propulsor 15, a rotation speed of the rotor sail 31, a hull tilt, a turning angular velocity, or the like. The control unit 60 acquires an input signal from an input unit 62. The input unit 62 is a device to which a user inputs various information. A signal when the input unit 62 is operated in conjunction with an external system may also be input to the input unit 62. As the input unit 62, a mouse, a keyboard, a touch panel, or the like is adopted. In addition, the input unit 62 may include a button or a switch operated by a crew.

The control unit 60 outputs a signal to a device 63, and receives a signal from the device 63. In addition, the management system 50 of the control unit 60 controls electric power exchange between the devices 63. The device 63 includes the wind power propulsion unit 10, the propulsor 12, the generator 39, and the battery 40. The control unit 60 outputs a signal including display contents to the display unit 64. The display unit 64 is a monitor. The display unit 64 may be provided in an indoor space of the ship 1, or may be a monitor of a portable terminal of the crew. When a touch panel is adopted as the display unit 64, the input unit 62 is incorporated in the display unit 64. An installation location of the display unit 64 is not particularly limited, and the display unit 64 may be disposed inside a cabin, or the display unit 64 for displaying a navigation mode may be disposed at a ship's bridge or another location so that the crew can recognize a current navigation mode. The automatic lamp 65 is automatically turned on. An automatic identification system (AIS) 66 switches a display of the AIS in accordance with the navigation mode.

The information acquisition unit 51 of the control unit 60 acquires various information for controlling the ship 1. The information acquisition unit 51 acquires detection information detected by the sensor 61. The information acquisition unit 51 may acquire information obtained via communication means other than the sensor 61. The navigation mode setting unit 52 sets the navigation mode of the ship 1. The navigation mode will be described later. The calculation unit 53 calculates various information. The calculation unit 53 calculates control contents for controlling an operation of the device 63, based on the set navigation mode. In addition, the calculation unit 53 calculates various information indicating an operation status of the ship 1 or a status of each device 63. The switching mode setting unit 54 sets a switching mode for switching the navigation mode. Details of the switching mode will be described later. The restriction unit 55 restricts a sail-powered driving mode under a predetermined condition. The storage unit 56 stores various information required for the control of the control system 100. The storage unit 56 stores operation contents of each device 63 in each navigation mode.

Here, the navigation mode will be described. As the navigation mode of the ship 1, the control system 100 includes at least an engine-powered driving mode in which the ship 1 is propelled only by the propulsor 12, an engine/sail-powered driving mode in which the ship 1 is propelled by the propulsor 12 and the wind power propulsion unit 10, and a sail-powered driving mode in which the ship 1 is propelled only by the wind power propulsion unit 10. In addition, as the sail-powered driving mode, the control system 100 includes a first sail-powered driving mode in which a fossil fuel is not used as driving energy, and a second sail-powered driving mode in which the fossil fuel is used as the driving energy. In addition, as the engine/sail-powered driving mode, the control system 100 includes a first engine/sail-powered driving mode in which the fossil fuel is not used as the driving energy, and a second engine/sail-powered driving mode in which the fossil fuel is used as the driving energy. In addition, as the engine-powered driving mode, the control system 100 includes a first engine-powered driving mode in which the fossil fuel is not used as the driving energy, and a second engine-powered driving mode in which the fossil fuel is used as the driving energy. The navigation mode setting unit 52 can automatically switch and set among the engine-powered driving mode, the engine/sail-powered driving mode, and the sail-powered driving mode. In addition, the navigation mode setting unit 52 can automatically set any one of the first sail-powered driving mode and the second sail-powered driving mode in the sail-powered driving mode, can automatically set any one of the first engine/sail-powered driving mode and the second engine/sail-powered driving mode in the engine/sail-powered driving mode, and can automatically set any one of the first engine-powered driving mode and the second engine-powered driving mode in the engine-powered driving mode. A configuration without using the fossil fuel as the driving energy will be referred to as "zero emission". In the following description, any state of the first sail-powered driving mode, the first engine/sail-powered driving mode, and the first engine-powered driving mode may be expressed as "zero emission". Unless otherwise specified, the navigation mode that is not expressed as the "zero emission" is a mode in which the fossil fuel is used as the driving energy, such as the second sail-powered driving mode, the second engine/sail-powered driving mode, and the second engine-powered driving mode.

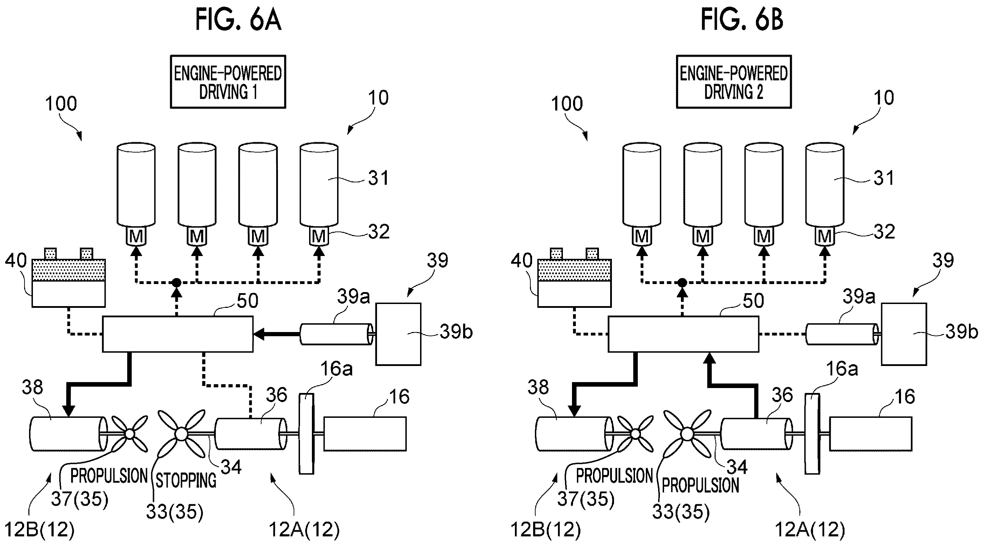

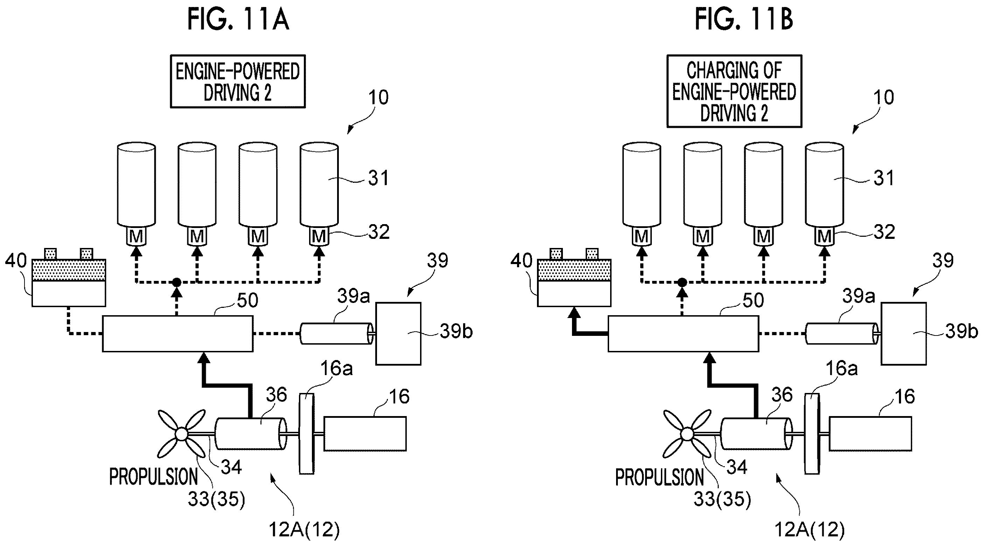

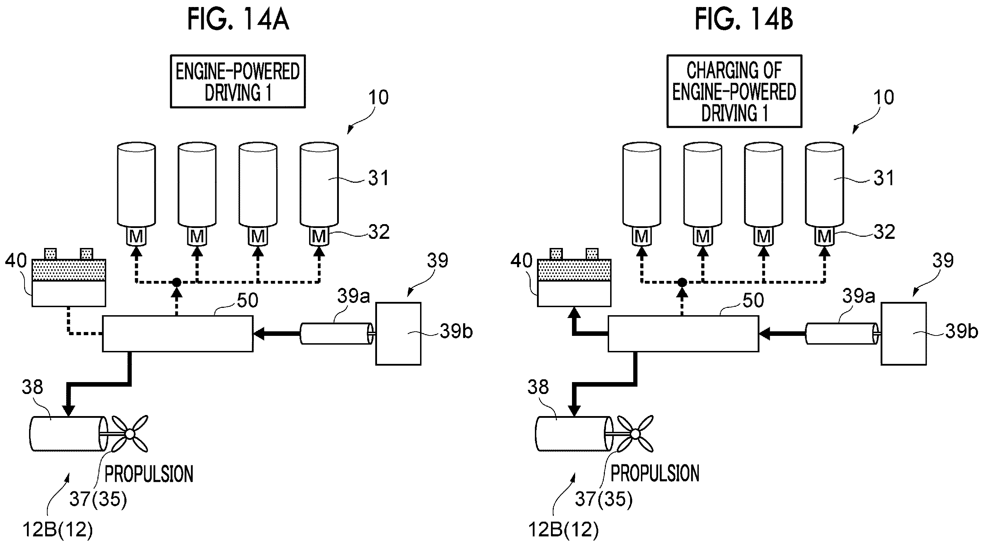

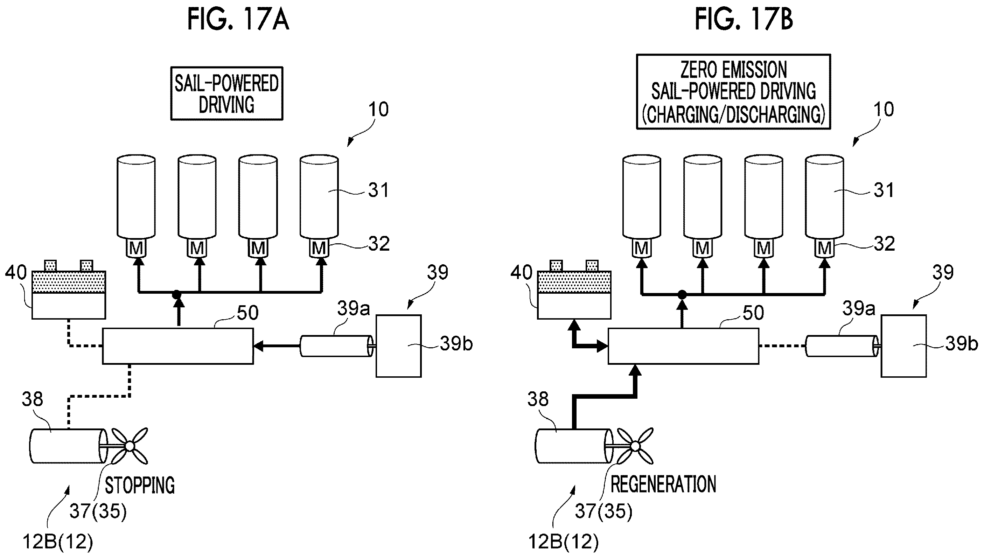

FIGS. 6A to 17B are model diagrams showing operation contents of the device 63 in each of the navigation modes in accordance with contents of the device 63 of the ship 1. The navigation mode setting unit 52 can set any one of the modes shown in FIGS. 6A to 17B in accordance with the contents of the device 63 belonging to the ship 1. In FIGS. 6A to 17B, a line to which electric power is supplied is indicated by a solid line arrow, and a line to which the electric power is not exchanged is indicated by a broken line. FIGS. 6A to 10B show an operation of the ship 1 including the two propulsors 12A and 12B. FIGS. 11A to 13B show an operation of the ship 1 including only the propulsor 12A on the front side. FIGS. 14A to 17B show an operation of the ship 1 including only the propulsor 12B on the rear side.

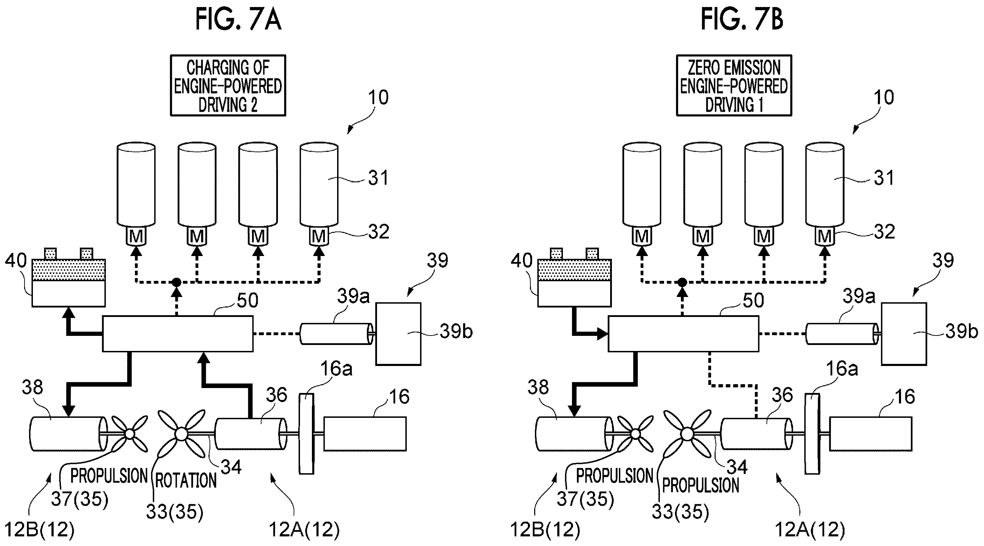

FIGS. 6A to 7B show an operation of the ship 1 including the propulsors 12A and 12B when the engine-powered driving mode is set as the navigation mode. In the engine-powered driving mode, the control system 100 operates the propulsor 12B, and controls the wind power propulsion unit 10 to be stopped. In "engine-powered driving 1" shown in FIG. 6A, the control system 100 stops the propulsor 12A, operates the generator 39, and supplies the electric power generated by the generator 39 to the management system 50. The management system 50 supplies the electric power from the generator 39 to the propulsor 12B. In "engine-powered driving 2" shown in FIG. 6B, the control system 100 stops the generator 39, operates the propulsor 12A, and supplies the electric power generated by the electric motor 36 of the propulsor 12A to the management system 50. The management system 50 supplies the electric power from the electric motor 36 to the propulsor 12B. In "charging of the engine-powered driving 2" shown in FIG. 7A, the control system 100 stops the generator 39, operates the propulsor 12A, and supplies the electric power generated by the electric motor 36 of the propulsor 12A to the management system 50. The management system 50 supplies the electric power from the electric motor 36 to the propulsor 12B, and supplies the electric power to charge the battery 40. In "zero emission engine-powered driving 1" shown in FIG. 7B, the control system 100 stops the generator 39, stops the propulsor 12A, and discharges the battery 40. The electric power discharged from the battery 40 is supplied to the management system 50. The management system 50 supplies the electric power from the battery 40 to the propulsor 12B.

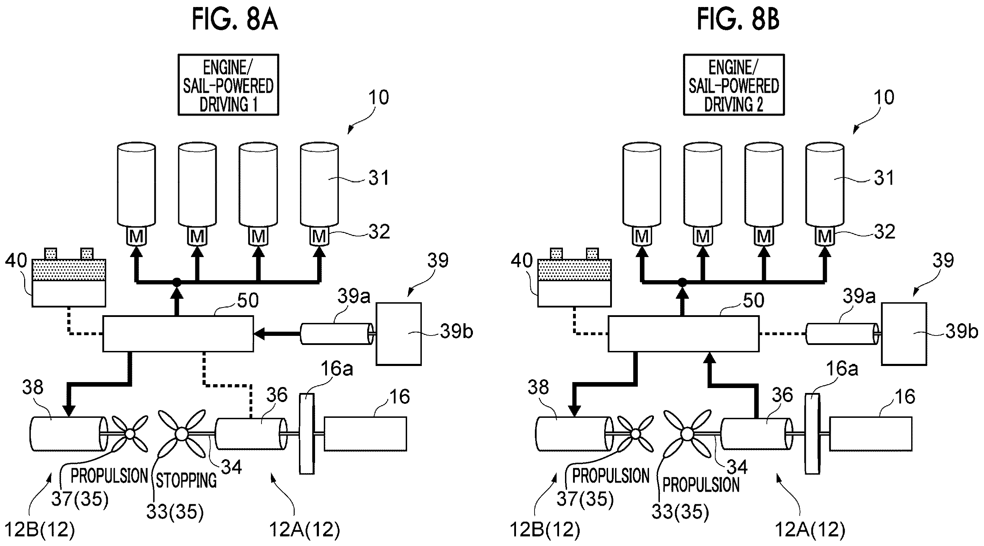

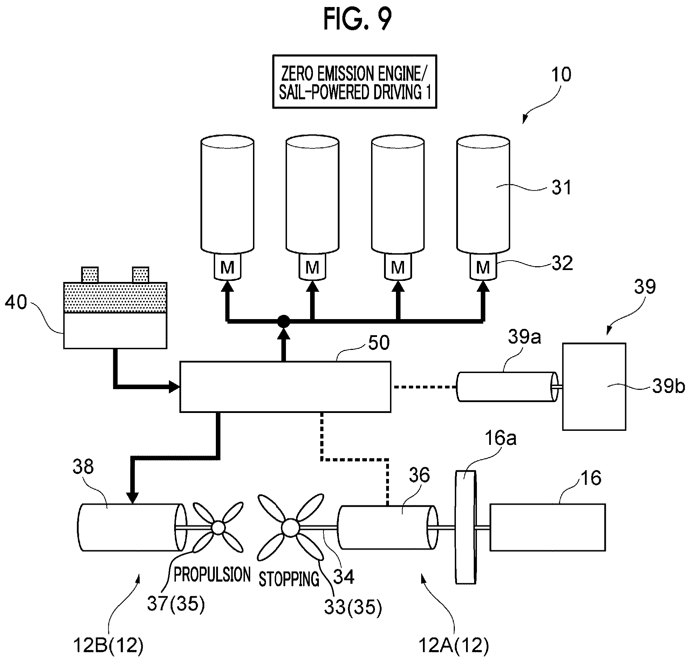

FIGS. 8A to 9 show an operation of the ship 1 including the propulsors 12A and 12B when the engine/sail-powered driving mode is set as the navigation mode. In the engine/sail-powered driving mode, the control system 100 operates the propulsor 12B, and controls the wind power propulsion unit 10 to be operated. In "engine/sail-powered driving 1" shown in FIG. 8A, the control system 100 stops the propulsor 12A, operates the generator 39, and supplies the electric power generated by the generator 39 to the management system 50. The management system 50 supplies the electric power from the generator 39 to the propulsor 12B and the wind power propulsion unit 10. In "engine/sail-powered driving 2" shown in FIG. 8B, the control system 100 stops the generator 39, operates the propulsor 12A, and supplies the electric power generated by the electric motor 36 of the propulsor 12A to the management system 50. The management system 50 supplies the electric power from the electric motor 36 to the propulsor 12B and the wind power propulsion unit 10. In "zero emission engine/sail-powered driving 1" shown in FIG. 9, the control system 100 stops the generator 39, stops the propulsor 12A, and discharges the battery 40. The electric power discharged from the battery 40 is supplied to the management system 50. The management system 50 supplies the electric power from the battery 40 to the propulsor 12B and the wind power propulsion unit 10.

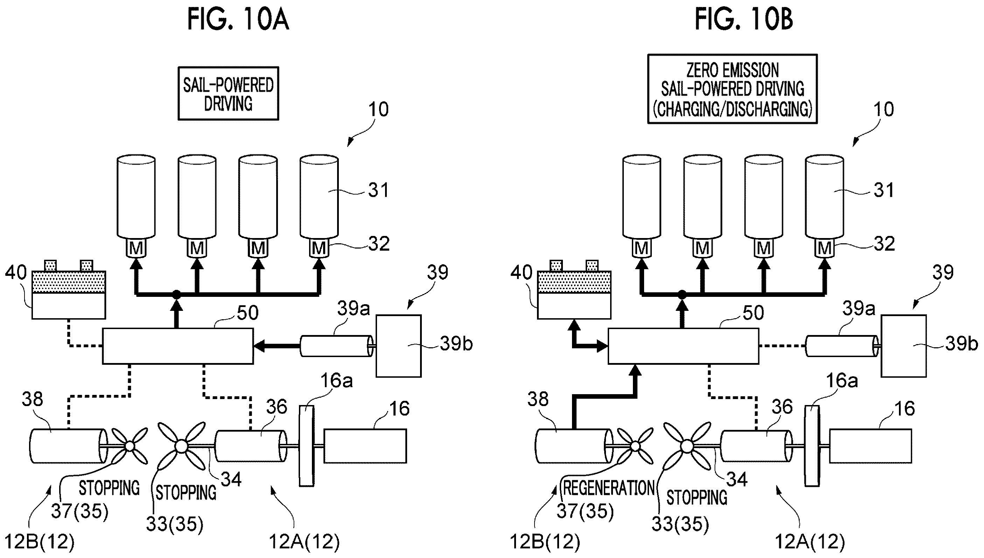

FIGS. 10A and 10B show an operation of the ship 1 including the propulsors 12A and 12B when the sail-powered driving mode is set as the navigation mode. In the sail-powered driving mode, the control system 100 stops (or regenerates) the propulsor 12B, and controls the wind power propulsion unit 10 to be operated. In "sail-powered driving" shown in FIG. 10A, the control system 100 stops the propulsors 12A and 12B, operates the generator 39, and supplies the electric power generated by the generator 39 to the management system 50. The management system 50 supplies the electric power from the generator 39 to the wind power propulsion unit 10. In the "zero emission sail-powered driving (charging/discharging)" shown in FIG. 10B, the control system 100 stops the generator 39, stops the propulsor 12A, and regenerates the electric power by causing the rear propeller 37 of the propulsor 12B to perform an idling operation like a turbine. The regenerated electric power generated by the propulsor 12B is supplied to the management system 50. The management system 50 supplies the electric power from the propulsor 12B to the wind power propulsion unit 10. The battery 40 may supply the electric power to the wind power propulsion unit 10 via the management system 50, or may be charged with the electric power from the propulsor 12B.

FIGS. 11A and 11B show an operation of the ship 1 including the propulsor 12A when the engine-powered driving mode is set as the navigation mode. In the engine-powered driving mode, the control system 100 operates the propulsor 12A, and controls the wind power propulsion unit 10 to be stopped. In the "engine-powered driving 2" shown in FIG. 11A, the control system 100 stops the generator 39, operates the propulsor 12A, and supplies the electric power generated by the electric motor 36 of the propulsor 12A to the management system 50. In the "charging of the engine-powered driving 2" shown in FIG. 11B, the control system 100 stops the generator 39, operates the propulsor 12A, and supplies the electric power generated by the electric motor 36 of the propulsor 12A to the management system 50. The management system 50 supplies the electric power from the electric motor 36 to the propulsor 12B, and supplies the electric power to charge the battery 40.

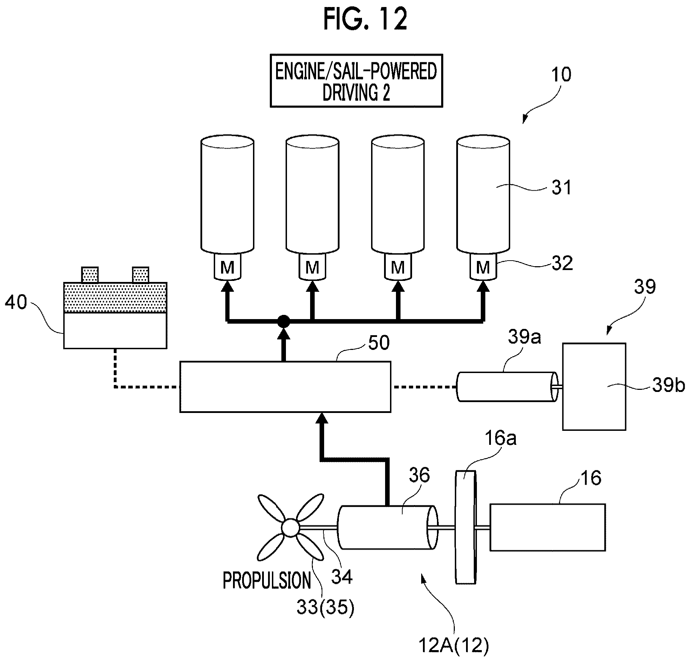

FIG. 12 shows an operation of the ship 1 including the propulsor 12A when the engine/sail-powered driving mode is set as the navigation mode. In the engine/sail-powered driving mode, the control system 100 operates the propulsor 12A, and controls the wind power propulsion unit 10 to be operated. In the "engine/sail-powered driving 2" shown in FIG. 12, the control system 100 stops the generator 39, operates the propulsor 12A, and supplies the electric power generated by the electric motor 36 of the propulsor 12A to the management system 50.

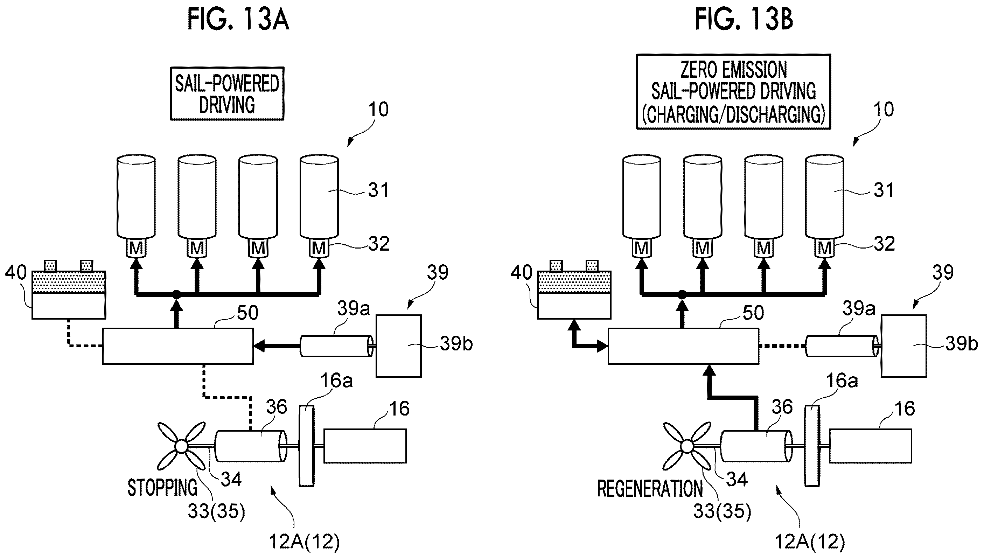

FIGS. 13A and 13B show an operation of the ship 1 including the propulsor 12A when the sail-powered driving mode is set as the navigation mode. In the sail-powered driving mode, the control system 100 controls the wind power propulsion unit 10 to be operated. In the "sail-powered driving" shown in FIG. 13A, the control system 100 stops the propulsor 12A, operates the generator 39, and supplies the electric power generated by the generator 39 to the management system 50. The management system 50 supplies the electric power from the generator 39 to the wind power propulsion unit 10. In the "zero emission sail-powered driving (charging/discharging)" shown in FIG. 13B, the control system 100 stops the generator 39, and causes the propulsor 12A to perform an idling operation. The regenerated electric power generated by the propulsor 12A is supplied to the management system 50. The management system 50 supplies the electric power from the propulsor 12A to the wind power propulsion unit 10. The battery 40 may supply the electric power to the wind power propulsion unit 10 via the management system 50, or may be charged with the electric power from the propulsor 12A.

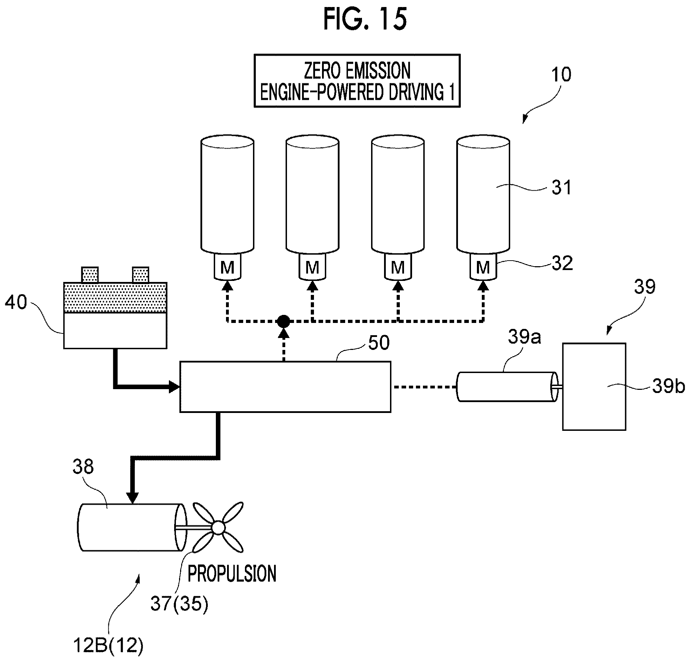

FIGS. 14A to 15 show an operation of the ship 1 including the propulsor 12B when the engine-powered driving mode is set as the navigation mode. In the engine-powered driving mode, the control system 100 operates the propulsor 12B, and controls the wind power propulsion unit 10 to be stopped. In the "engine-powered driving 1" shown in FIG. 14A, the control system 100 operates the generator 39, operates the propulsor 12B, and supplies the electric power generated by the generator 39 to the management system 50. In the "charging of the engine-powered driving 1" shown in FIG. 14B, the control system 100 operates the generator 39, and supplies the electric power generated by the generator 39 to the management system 50. The management system 50 supplies the electric power from the generator 39 to the propulsor 12B, and supplies the electric power to charge the battery 40. In the "zero emission engine-powered driving 1" shown in FIG. 15, the control system 100 stops the generator 39, and discharges the battery 40. The electric power discharged from the battery 40 is supplied to the management system 50. The management system 50 supplies the electric power from the battery 40 to the propulsor 12B.

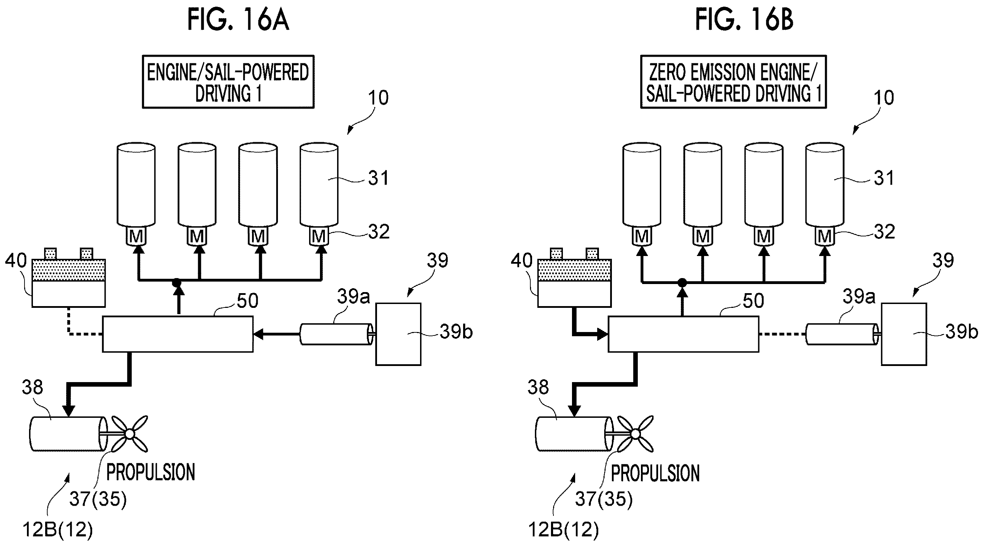

FIGS. 16A and 16B show an operation of the ship 1 including the propulsor 12B when the engine/sail-powered driving mode is set as the navigation mode. In the engine/sail-powered driving mode, the control system 100 operates the propulsor 12B, and controls the wind power propulsion unit 10 to be operated. In the "engine/sail-powered driving 1" shown in FIG. 16A, the control system 100 operates the generator 39, and supplies the electric power generated by the generator 39 to the management system 50. The management system 50 supplies the electric power from the generator 39 to the propulsor 12B and the wind power propulsion unit 10. In the "zero emission engine/sail-powered driving 1" shown in FIG. 16B, the control system 100 stops the generator 39, and discharges the battery 40. The electric power discharged from the battery 40 is supplied to the management system 50. The management system 50 supplies the electric power from the battery 40 to the propulsor 12B and the wind power propulsion unit 10.

FIGS. 17A and 17B show an operation of the ship 1 including the propulsor 12B when the sail-powered driving mode is set as the navigation mode. In the sail-powered driving mode, the control system 100 stops (or regenerates) the propulsor 12B, and controls the wind power propulsion unit 10 to be operated. In the "sail-powered driving" shown in FIG. 17A, the control system 100 stops the propulsor 12B, operates the generator 39, and supplies the electric power generated by the generator 39 to the management system 50. The management system 50 supplies the electric power from the generator 39 to the wind power propulsion unit 10. In the "zero emission sail-powered driving (charging/discharging)" shown in FIG. 17B, the control system 100 stops the generator 39, and regenerates by causing the rear propeller 37 of the propulsor 12B to perform an idling operation. The regenerated electric power generated by the propulsor 12B is supplied to the management system 50. The management system 50 supplies the electric power from the propulsor 12B to the wind power propulsion unit 10. The battery 40 may supply the electric power to the wind power propulsion unit 10 via the management system 50, or may be charged with the electric power from the propulsor 12B.

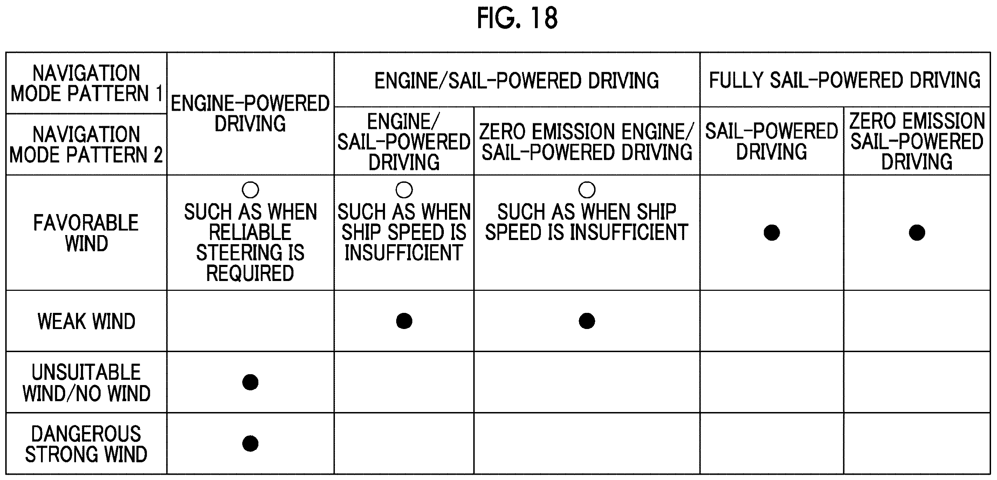

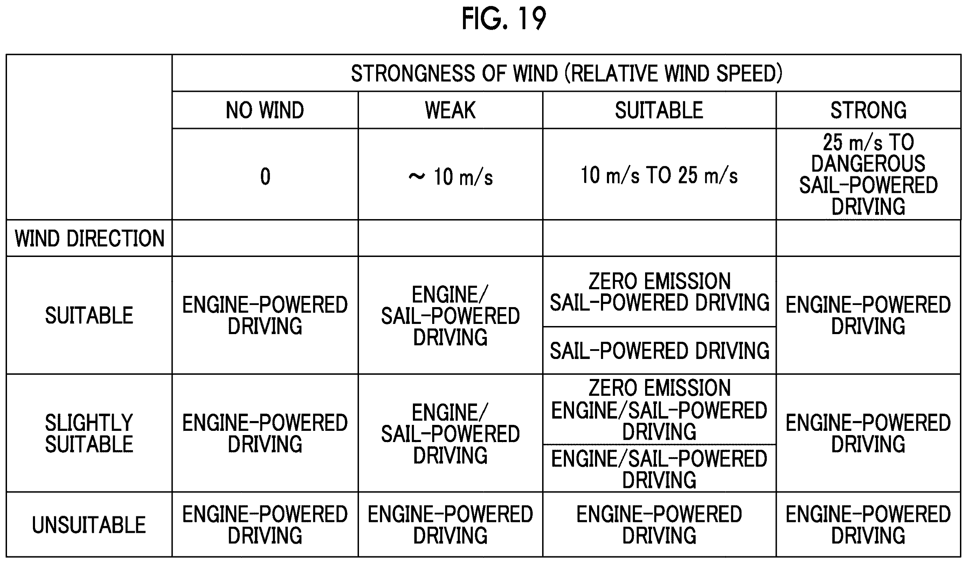

FIG. 18 is a table showing a relationship between a wind condition and a navigation mode. A suitable wind indicates a state where the wind power propulsion unit 10 has a wind direction and a wind speed such that the thrust can be secured with respect to a target course direction. An unsuitable wind indicates a wind unsuitable for the sail-powered driving or the engine/sail-powered driving in the target course direction. In the table, the navigation mode in which a black circle is attached to a wind condition can be adopted. The navigation mode in which a white circle is attached to the wind condition indicates that the navigation mode can be adopted depending on a situation. The navigation mode setting unit 52 sets the navigation mode in view of the wind condition as shown in FIG. 18. FIG. 19 is a table showing suitability of each navigation mode for each wind direction and wind speed. The navigation mode setting unit 52 compares the acquired wind direction and wind speed from data shown in FIG. 19, determines which situation is applicable by performing automatic control, and sets the navigation mode. The storage unit 56 may store information shown in FIGS. 18 and 19.

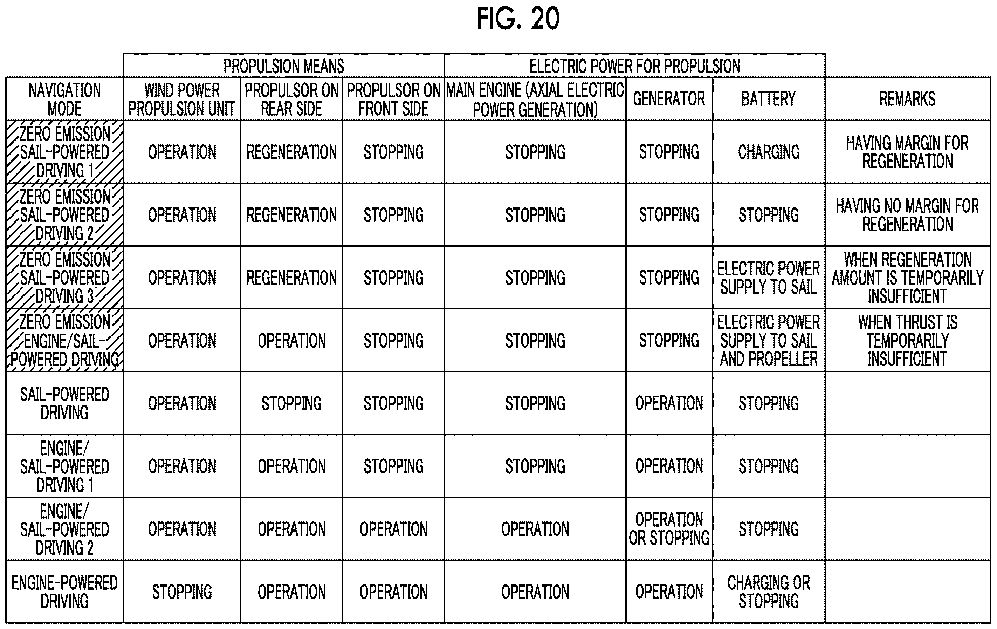

FIG. 20 is a table showing a relationship between the navigation mode and an operation status of each of the devices 63. The "zero emission sail-powered driving 1" is the sail-powered driving mode in which charging is performed in the zero emission sail-powered driving shown in FIG. 10B. The "zero emission sail-powered driving 2" is the sail-powered driving mode in which the battery 40 is stopped from the zero emission sail-powered driving shown in FIG. 10B. The "zero emission sail-powered driving 3" is the sail-powered driving mode in which discharging is performed in the zero emission sail-powered driving shown in FIG. 10B. In the " zero emission sail-powered driving 3", "electric power supply to the sail" means that the battery 40 is discharged to supply the electric power to the wind power propulsion unit 10. In the "zero emission engine/sail-powered driving", "electric power supply to the sail and the propeller" means that the battery 40 is discharged to supply the electric power to the wind power propulsion unit 10 and to supply the electric power to the propulsor 12B. The "zero emission engine/sail-powered driving" is the engine/sail-powered driving mode corresponding to the "zero emission engine/sail-powered driving 1" shown in FIG. 9. The "sail-powered driving" is the sail-powered driving mode corresponding to the "sail-powered driving" shown in FIG. 10A. The "engine/sail-powered driving 1" is the engine/sail-powered driving mode corresponding to the "engine/sail-powered driving 1" in FIG. 8A. The "engine/sail-powered driving 2" is the engine/sail-powered driving mode corresponding to the "engine/sail-powered driving 2" in FIG. 8B. However, in the "engine/sail-powered driving 2", the generator 39 may be operated, or may be stopped. The "engine-powered driving" is the engine-powered driving mode in which the main engine 16 and the generator 39 are operated in combination between FIGS. 6A and 6B. The battery 40 may be charged, or may not be charged as shown in FIG. 7A. The storage unit 56 may store information shown in FIG. 20.

An example of setting contents of the navigation mode or mode switching contents in the control system 100 will be described. However, an operation of the control system 100 is not limited to the following examples, and can be appropriately changed. For example, the control system 100 can select modes of the "stopping", the "engine-powered driving", the "engine/sail-powered driving", the "sail-powered driving", the "zero emission engine/sail-powered driving", and the "zero emission sail-powered driving", based on information shown in FIGS. 19 and 20. The navigation mode setting unit 52 selects and sets a proper mode from these modes in accordance with a situation. The modes of the "zero emission engine/sail-powered driving" and the "zero emission sail-powered driving" can be automatically switched, or can be manually switched by the crew, when the mode is in a usable condition.

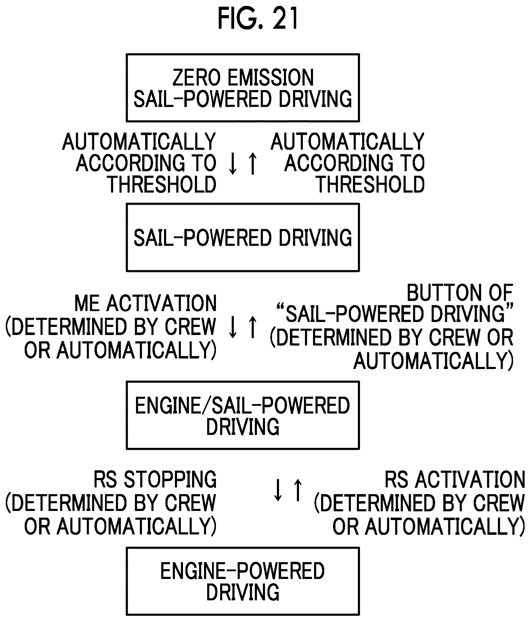

FIG. 21 is a conceptual diagram showing contents of a first switching pattern, as an example of a switching pattern of the navigation mode. As shown in FIG. 21, the control system 100 switches the navigation mode between the "zero emission sail-powered driving" and the "sail-powered driving". The control system 100 sets a threshold for the wind speed or the like, and automatically switches between the "zero emission sail-powered driving" and the "sail-powered driving" when the wind speed reaches the threshold. The control system 100 switches the navigation mode between the "sail-powered driving" and the "engine/sail-powered driving". When the main engine 16 is activated by the determination of the crew, the control system 100 switches the "sail-powered driving" to the "engine/sail-powered driving". When a button for the "sail-powered driving" is pressed by the determination of the crew, the control system 100 switches the "engine/sail-powered driving" to the "sail-powered driving". The control system 100 switches the navigation mode between the "engine/sail-powered driving" and the "engine-powered driving". When the activation and the stopping of the wind power propulsion unit 10 are switched by the determination of the crew, the control system 100 switches between the "engine/sail-powered driving" and the "engine-powered driving".

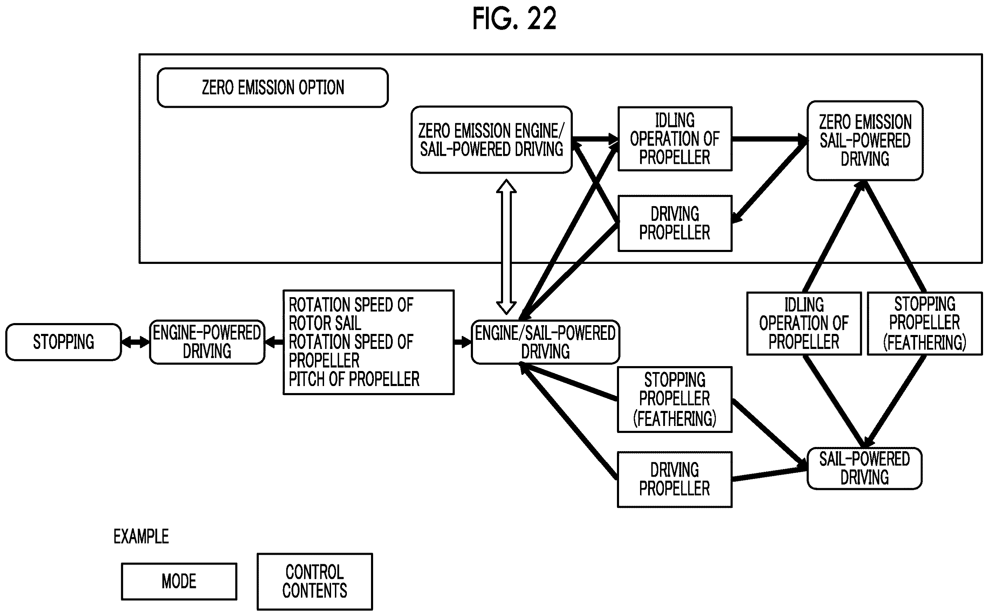

FIG. 22 is a conceptual diagram showing contents of a second switching pattern, as an example of the switching pattern of the navigation mode. As shown in FIG. 22, the control system 100 switches the mode between the "stopping" and the "engine-powered driving". The control system 100 switches the navigation mode between the "engine-powered driving" and the "engine/sail-powered driving". When switching the navigation mode between the "engine-powered driving" and the "engine/sail-powered driving", the control system 100 controls the activation, the stopping, and the rotation speed of the rotor sail 31 of the wind power propulsion unit 10, and controls the rotation speed and a propeller pitch of the propeller of the propulsor 12. When the navigation mode is switched to the engine/sail-powered driving, the control system 100 adjusts a thrust sharing ratio between the wind power propulsion unit 10 and the propulsor 12 in accordance with a requested ship speed. The control system 100 switches the navigation mode between the "engine/sail-powered driving" and the "sail-powered driving". When switching the navigation mode between the "engine/sail-powered driving" and the "sail-powered driving", the control system 100 switches between the stopping (feathering) and the driving of the propeller of the propulsor 12. The control system 100 switches the navigation mode between the "engine/sail-powered driving" and the "zero emission engine/sail-powered driving". When switching the navigation mode between the "engine/sail-powered driving" and the "zero emission engine/sail-powered driving", the control system 100 switches between using the regenerated electric power, the battery 40, or the like as a drive source and using the main engine 16, the generator 39, or the like as the drive source. The control system 100 switches the navigation mode between the "engine/sail-powered driving" and the "zero emission sail-powered driving". When switching the navigation mode between the "engine/sail-powered driving" and the "zero emission sail-powered driving", the control system 100 switches between the idling operation and the driving of the propeller of the propulsor 12. The control system 100 switches the navigation mode between the "sail-powered driving" and the "zero emission sail-powered driving". When switching the navigation mode between the "sail-powered driving" and the "zero emission sail-powered driving", the control system 100 switches between the idling operation and the stopping (feathering) of the propeller of the propulsor 12. The control system 100 can automatically or manually switch the navigation mode under a condition that the navigation mode of a "zero emission option" can be used.

Next, a switching mode for the control system 100 to switch the navigation mode will be described. As the switching mode, the control system 100 includes an automatic mode for automatically switching the navigation mode, a manual mode for manually switching the navigation mode, an external input mode for switching the navigation mode in conjunction with an external system, and an emergency mode for forcibly switching the navigation mode to the manual engine-powered driving mode. In the automatic mode, the control system 100 automatically switches the navigation mode by setting a designated ship speed priority, a fuel economy priority, or the like. The control system 100 automatically switches the navigation mode to the zero emission sail-powered driving under a wind condition that zero emission sailing can be performed. The control system 100 automatically charges the battery 40 at a proper timing. In the automatic mode, there is an advantage in that the ship can be steered in the same manner as a normal engine ship even when the crew has an insufficient knowledge about a sailing ship. In the automatic mode, there is a disadvantage in that the crew is less likely to intervene the navigation in an emergency since everything depends on the engine. The manual mode is a mode in which the crew selects each of the navigation modes as desired. In the manual mode, there is an advantage in that the navigation mode can be shifted to a specific navigation mode at a timing preferred by the crew. In the manual mode, there is a disadvantage in that the crew is less likely to select the navigation mode when the crew has no knowledge about or no experience in an operation of a sailing ship. For example, the external input mode is a mode in which the navigation mode is automatically switched in conjunction with a weather routing or a sail steering control system. Other functions of the external input mode are the same as those of the automatic mode. The emergency mode is a mode in which the navigation mode is forcibly switched to the manual mode and the engine-powered driving regardless of a sailing state. For example, the emergency mode may be used as an operation in an emergency state in a case of danger avoidance or a partial device failure. The emergency mode has an advantage in a human error can be avoided by a reliable switching operation in a short time. The manual mode, the automatic mode, and the external input mode may be selected by the crew. The switching mode setting unit 54 sets the switching mode in the selected mode. The switching mode setting unit 54 automatically switches the navigation mode to the emergency mode at a timing in an emergency state.

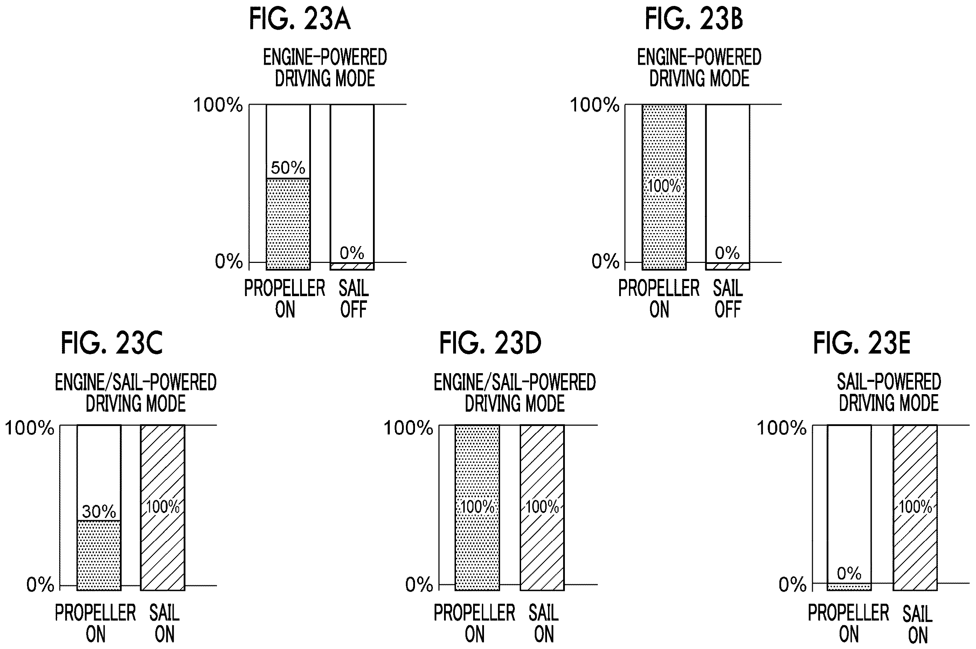

Next, referring to FIGS. 23A to 23E, an example of output sharing between the propeller of the propulsor 12 and the rotor sail 31 of the wind power propulsion unit 10 in a request mode will be described. The request mode is a mode in which the operation is performed in response to a request of the crew. An output of the propeller of the propulsor 12 is controlled by adjusting the rotation speed and a pitch angle, and an output of the rotor sail 31 is controlled by adjusting the rotation speed. FIG. 23A is an example of the output sharing in a case of the request mode in which the ship speed has the priority. Here, the control system 100 achieves a designated ship speed by setting the engine-powered driving mode and setting the output of the propulsor 12 to correspond to the designated ship speed. FIG. 23B is an example of the output sharing in a case of the request mode in which the output of the propulsor is constant. Here, the control system 100 maintains a constant propeller rotation speed by setting the navigation mode to the engine-powered driving mode and setting the output of the propulsor 12 to 100%. FIG. 23C is an example of the output sharing in a case of the request mode in which minimizing the fuel economy has the priority. Here, the control system 100 adjusts the ship speed with the propeller of the propulsor 12 by setting the navigation mode to the engine/sail-powered driving mode and setting the rotor sail 31 to have a maximum output. FIG. 23D is an example of the output sharing when a maximum ship speed is designated in the request mode in which the ship speed has the priority. Here, the control system 100 sets the navigation mode to the engine/sail-powered driving mode, secures a required ship speed by setting the propeller of the propulsor 12 to have the maximum output, and assists the rotor sail 31 to have the maximum output. FIG. 23E is an example of the output sharing in a case of the request mode in which minimizing the fuel economy has the priority. Here, the control system 100 sets the navigation mode to the sail-powered driving mode, sets the propeller of the propulsor 12 to a regeneration state, and operates the rotor sail 31 to have the maximum output. In this case, the control system 100 frequently uses the zero emission sail-powered driving and the zero emission engine/sail-powered driving in accordance with a wind condition.

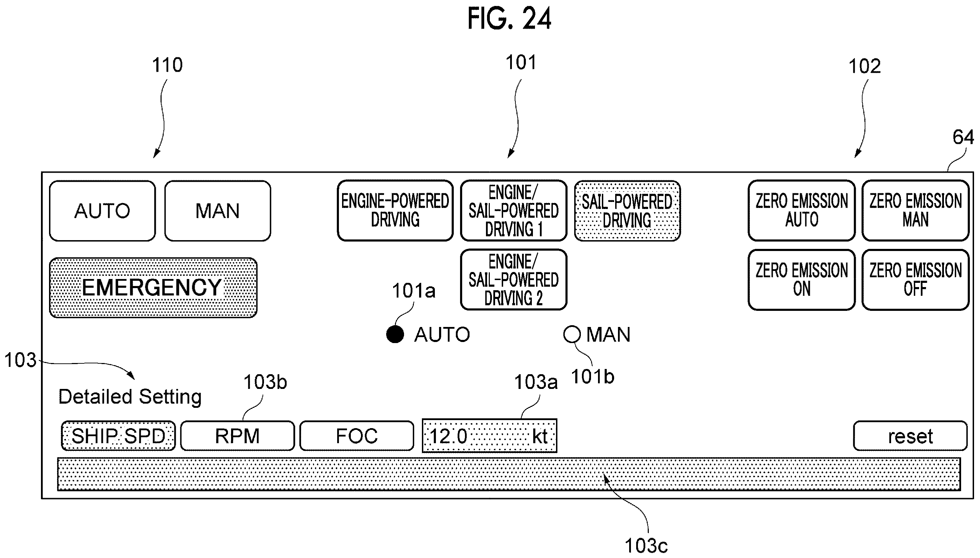

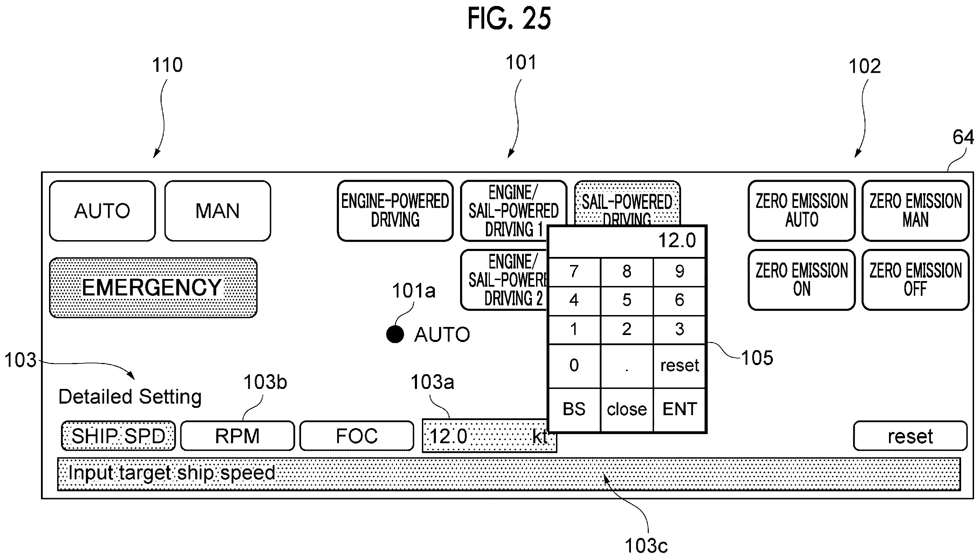

Next, an example of a display screen of the display unit 64 used as an operation touch panel will be described with reference to FIGS. 24 and 25. As shown in FIGS. 24 and 25, the display unit 64 has at least a switching mode switch region 110, a navigation mode switching switch region 101, a zero emission switch region 102, and a setting region 103.

The switching mode switch region 110 includes a switch for switching among a manual mode (MAN), an automatic mode (AUTO), and an emergency mode (EMERGENCY). When the emergency mode switch is pressed, the zero emission operation is turned off, the navigation mode is set to the engine-powered driving mode, and the switching switch is forcibly set to the manual mode. The navigation mode switching switch region 101 has a switch for manually switching the mode to each navigation mode in the manual mode (MAN). The lamp 101a is turned on in the automatic mode, and the lamp 101b is turned on in the manual mode. Each switch of the navigation mode switching switch region 101 can be pressed when the manual mode is set, and cannot be pressed when the automatic mode is set. In the navigation mode switching switch region 101, a switch of the set navigation mode may be turned on. Here, the switch of the "sail-powered driving" is turned on. In addition, a switch corresponding to the shifted navigation mode may be blinked. In a case of displaying that the navigation mode is the engine/sail-powered driving mode when the "engine-powered driving" is switched to the "sail-powered driving" or the "sail-powered driving" is switched to the "engine-powered driving", a message such as "under switching to the engine/sail-powered driving" may be displayed. The zero emission switch region 102 includes a switch (zero emission AUTO) for automatically switching the navigation mode to the zero emission mode and a switch (zero emission MAN) for manually switching the navigation mode to the zero emission mode, and a switch corresponding to a current mode is turned on. In a case of the manual mode, a switch (zero emission ON) for turning on the zero emission mode and a switch (zero emission OFF) for turning off the zero emission mode can be pressed. However, in a case of the automatic mode, the ON/OFF switches cannot be pressed. An operation of the zero emission switch region 102 is not affected by a state of the switching mode switch region 110.

In the setting region 103, a field for performing various settings is set. The setting region 103 can set an external input or the request mode described in FIGS. 23A to 23E. A value of the request mode can be input to the field 103a. A ship speed priority mode (SHIP SPD), an output constant mode (RPM), and a fuel economy priority mode (FOC) can be selected as the request mode. The ship speed priority mode usually has a highest priority. The request mode is released, and the ship speed priority mode is restored by pressing a "reset" switch. When any of the switches in the request mode is pressed, the selected switch is turned on, or a panel display is performed. In addition, in a case of the touch panel, a pop-up 105 is raised, and a numerical value can be input (refer to FIG. 25). An input value is displayed in a setting value display field 103b. In the setting value display field 103b, not only a setting value but also a unit is displayed. For example, "kt" is displayed as the ship speed, "RPM" is displayed as the rotation speed, and "t/d" is displayed as fuel consumption. The setting value may be input up to a first decimal place. Only one request mode can be set, and a plurality of the request modes cannot be set. When the request mode is changed, the "reset" switch may be pressed once. Various messages such as a message indicating that the navigation mode is switched to the engine/sail-powered driving mode or a message guiding a value to be input are displayed in a message field 103c.

In addition to the functions described above, the control system 100 may have the following additional functions. The control system 100 may have a function of switching the automatic lamp 65 during the sail-powered driving mode. Specifically, when the control system 100 sets the navigation mode to the sail-powered driving mode, the automatic lamp 65 may automatically turn on/off as necessary in accordance with a predetermined regulation (for example, Article 25 of the Maritime Collision Prevention Law). As for switching the automatic lamp, unnecessary lighting is automatically turned off (power off) from lighting during normal engine-powered driving, and necessary lighting is automatically turned on (power on). The control system 100 may have a function of restricting the sail-powered driving mode under a predetermined condition. For example, the control system 100 may have a restriction function so that the navigation mode can be shifted to the sail-powered driving mode only when the ship 1 is separated by a prescribed distance from the coast. In addition, the control system 100 may restrict a possibility that the navigation mode is set to the sail-powered driving mode in a congested sea area. Since the navigation mode is restricted in this way, it is possible to prevent accidents such as running aground and collision caused by a sail-powered driving ship. The control system 100 may acquire position information of the ship 1 by using the GPS or the like, and may restrict the navigation mode by determining a distance to the coast. The control system 100 may notify an alarm when another ship is close to the ship 1 within a prescribed range during the sail-powered driving mode. For example, the control system 100 may notify the crew of a message for recommending communication using short-range communication (VHF). The control system 100 may have a function of automatically rewriting a display on the automatic identification system (AIS) to a display of "SAILING" indicating that the navigation mode is the sail-powered driving mode during the sail-powered driving mode. The control system 100 may have a function of detecting drift objects (icebergs, buoys, driftwood, and the like), and may issue a warning or the like when the drift objects are detected. The control system 100 may have an automatic switching function in an emergency. For example, the control system 100 may have a function of setting the engine-powered driving mode or the engine/sail-powered driving mode regardless of the navigation mode, when a general emergency alarm device (General Alarm) is used.

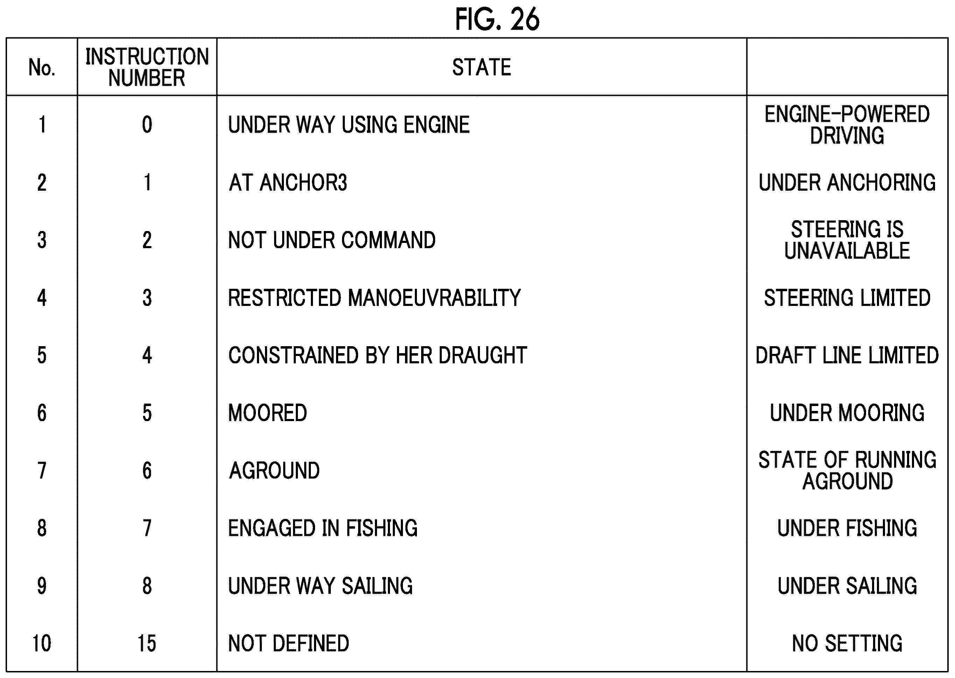

With regard to the automatic identification device (AIS), as described above, the control system 100 may also automatically switch the automatic identification device in accordance with the automatic switching of the navigation mode. In the automatic identification device, for example, a state as shown in FIG. 26 is determined. For example, FIG. 26 shows contents based on "Kobayashi, Eiichi, Journal of the Japan Institute of Navigation, 2004, Volume 160, pages 73-83". In contrast, for example, in a case of the engine-powered driving mode and the engine/sail-powered driving mode, the navigation mode may be automatically switched to "UNDER WAY USING ENGINE", and in a case of the sail-powered driving mode, the navigation mode may be automatically switched to "UNDER WAY SAILING".

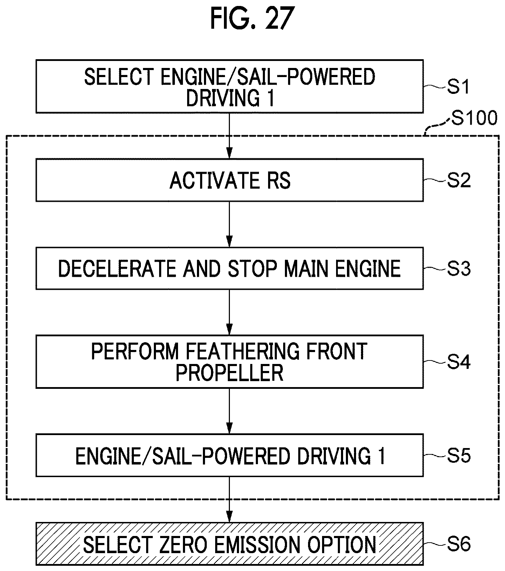

Next, an example of process contents when the control system 100 switches the navigation mode will be described. Switching the navigation mode from the engine-powered driving mode to the engine/sail-powered driving mode will be described. When the navigation mode is switched from the "engine-powered driving" to the "engine/sail-powered driving 1" in FIG. 20, the control system 100 activates the rotor sail 31, stops the main engine 16, and feathers the front propeller 33 of the propulsor 12A on the front side. In addition, when the navigation mode is completely shifted from the "engine-powered driving" to the "engine/sail-powered driving 1", the control system 100 enables the crew to select whether or not to set the "zero emission engine/sail-powered driving" as an option in the "engine/sail-powered driving 1". As shown in a flowchart in FIG. 27, when the mode of the "engine/sail-powered driving 1" is selected in a case of the "engine-powered driving" mode (Step S1), the control system 100 activates the rotor sail 31, and gradually increases the rotation speed in accordance with a current ship speed or a relative wind speed (Step S2). The control system 100 gradually decelerates the main engine 16, and stops the main engine 16 (Step S3). After the main engine 16 is stopped, the control system 100 feathers the front propeller 33 (Step S4), and completely shifts the navigation mode to the "engine/sail-powered driving 1" (Step S5). In this case, since the ship speed decreases, the control system 100 adjusts the rotation speed of the rear propeller 37 or the rotation speed of the rotor sail 31, and controls the ship 1 to maintain the ship speed when the "engine/sail-powered driving 1" is selected. The control system 100 determines whether or not the zero emission option can be used based on a relative wind direction and a relative wind speed, and enables the crew to select the zero emission option when the zero emission option can be used (Step S6). When the zero emission option is not selected, the zero emission option is not used.

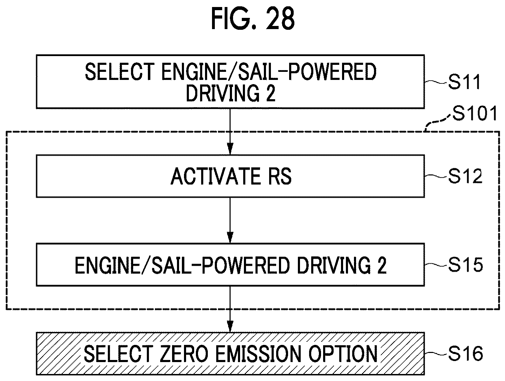

When the navigation mode is switched from the "engine-powered driving" to the "engine/sail-powered driving 2" in FIG. 20, the control system 100 activates the rotor sail 31, and shifts the navigation mode to the "engine/sail-powered driving 2". In addition, when the navigation mode is completely shifted from the "engine-powered driving" to the "engine/sail-powered driving 2", the control system 100 enables the crew to select whether or not to set the "zero emission engine/sail-powered driving" as an option in the "engine/sail-powered driving 2". When the mode of the "engine/sail-powered driving 2" is selected in a case of the "engine-powered driving" mode as shown in a flowchart in FIG. 28 (Step S11), the control system 100 activates the rotor sail 31, and gradually increases the rotation speed in accordance with the current ship speed or the relative wind speed (Step S12). In this manner, the control system 100 completely shifts the navigation mode to the "engine/sail-powered driving 2" (Step S15). The control system 100 adjusts the rotation speed of the rotor sail 31, and controls the ship 1 to maintain the ship speed when the "engine/sail-powered driving 2" is selected. The control system 100 determines whether or not the zero emission option can be used based on the relative wind direction and the relative wind speed, and enables the crew to select the zero emission option when the zero emission option can be used (Step S16). When the zero emission option is not selected, the zero emission option is not used.

Next, switching the navigation mode from the engine-powered driving mode to the sail-powered driving mode will be described. When the navigation mode is switched from the "engine-powered driving" to the "sail-powered driving" in FIG. 20, the control system 100 switches the navigation mode to the sail-powered driving mode via the engine/sail-powered driving mode ("engine/sail-powered driving 1" or "engine/sail-powered driving 2") on the system. In this case, since the switching is performed only via the engine/sail-powered driving mode on the system, there is no zero emission option. When the navigation mode is completely shifted from the "engine-powered driving" to the "sail-powered driving", as an option in "sail-powered driving", the control system 100 enables the crew to select whether or not to set the navigation mode to "zero emission sail-powered driving 1" when there is a margin for regeneration, the "zero emission sail-powered driving 2" when there is no margin for regeneration, or the "zero emission sail-powered driving 3" when there is a temporary shortage of the amount of regeneration. Which option of the zero emission sail-powered driving 1 to 3 is operated may be determined through the complete automatic control.

When the navigation mode is switched from the "engine-powered driving" to the "sail-powered driving" via the "engine/sail-powered driving 1" in FIG. 20, the control system 100 first shifts the navigation mode from the "engine-powered driving " to the "engine/sail-powered driving 1". When the "engine/sail-powered driving 1" is stabilized, the control system 100 shifts the navigation mode from the "engine/sail-powered driving 1" to the "sail-powered driving". In addition, when the navigation mode is completely shifted from the "engine/sail-powered driving 1" to "sail-powered driving", the control system 100 enables the crew to select whether or not to set the "zero emission sail-powered driving" as an option in the "sail-powered driving". When the navigation mode is switched from the "engine-powered driving" to the "sail-powered driving" via the "engine/sail-powered driving 2" in FIG. 20, the control system 100 first shifts the navigation mode from the "engine-powered driving" to the "engine/sail-powered driving 2". When the "engine/sail-powered driving 2" is stabilized, the control system 100 shifts the navigation mode from the "engine/sail-powered driving 2" to the "sail-powered driving". In addition, when the navigation mode is completely shifted from the "engine/sail-powered driving 2" to the "sail-powered driving", the control system 100 enables the crew to select whether or not to switch the navigation mode to the "zero emission sail-powered driving" as an option in the "sail-powered driving".

Next, switching the navigation mode from the engine/sail-powered driving mode to the engine-powered driving mode will be described. When the navigation mode is switched from the "engine/sail-powered driving 1" or the "engine/sail-powered driving 2" to the "engine-powered driving" in FIG. 20, the control system 100 first releases the zero emission option when the zero emission option is adopted during the engine/sail-powered driving. When the mode is selected, the control system 100 activates the main engine 16. When the operation of the main engine 16 is stabilized, the control system 100 gradually lowers and stops the rotation of the rotor sail 31, and shifts the navigation mode to a general engine-powered driving mode.

Next, switching the navigation mode from the engine/sail-powered driving mode to the sail-powered driving mode will be described. When the navigation mode is switched from the "engine/sail-powered driving 1" or "engine/sail-powered driving 2" to the "sail-powered driving" in FIG. 20, the control system 100 first releases the zero emission option, when the zero emission option is adopted during the engine/sail-powered driving. When the mode is selected, the control system 100 sets the main engine 16 to a standby state. In a case of the "engine/sail-powered driving 2", the main engine 16 is set to the standby state, and thereafter, the front propeller 33 is feathered. The control system 100 adjusts the rotation speed of the rotor sail 31 in accordance with the wind condition, and brings the ship 1 into a stable sailing-available state only with the rotor sail 31. The control system 100 stops the rear propeller 37 after the front propeller 33 is completely feathered, switches an electric circuit for regeneration, and shifts the navigation mode to the "sail-powered driving". In addition, when the navigation mode is completely shifted from the "engine/sail-powered driving" to the "sail-powered driving", the control system 100 enables the crew to select whether or not to set the "zero emission sail-powered driving" as an option in the "sail-powered driving".

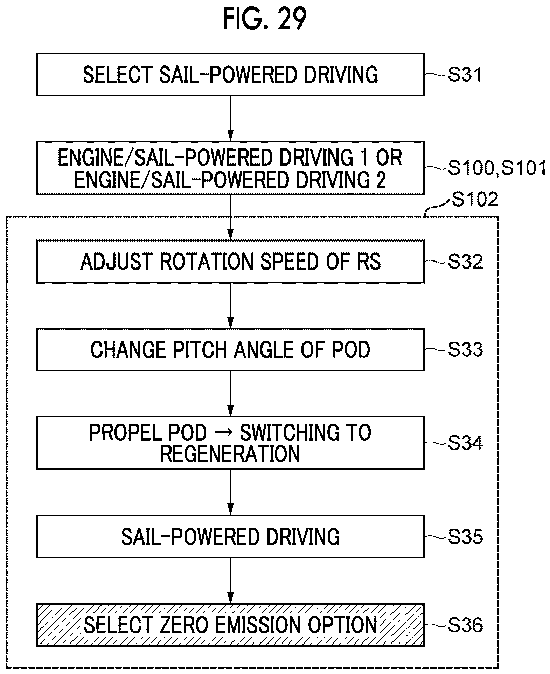

A step when the navigation mode is shifted from the "engine-powered driving" to the "sail-powered driving" will be described with reference to FIG. 29. When the mode of the "sail-powered driving" is selected in a case of the "engine-powered driving" mode as shown in a flowchart in FIG. 29 (Step S31), the control system 100 performs a process of shifting the navigation mode to the "engine/sail-powered driving 1" (Step S100, refer to FIG. 27) or a process of shifting the navigation mode to the "engine/sail-powered driving 2" (Step S101, refer to FIG. 28). Next, the control system 100 adjusts the rotation speed of the rotor sail 31, based on the relative wind direction and the relative wind speed (Step S32). The control system 100 changes the pitch angle of the rear propeller 37 to a pitch angle at which driving electric power of the rotor sail 31 can be regenerated, based on the current ship speed (Step S33). In this manner, the control system 100 switches the rear propeller 37 from propulsion to electric power regeneration (Step S34). In this manner, the control system 100 completely shifts the navigation mode to the "sail-powered driving" (Step S35). The control system 100 adjusts the rotation speed of the rotor sail 31 or the pitch angle of the rear propeller 37 in accordance with the wind condition. The control system 100 determines whether or not the zero emission option can be used based on the relative wind direction and the relative wind speed, and enables the crew to select the zero emission option when the zero emission option can be used (Step S36). When the zero emission option is not selected, the zero emission option is not used. In a step shown in FIG. 29, a shifting process shown in Step S102 corresponds to a step when the navigation mode is shifted from the "engine/sail-powered driving" to the "sail-powered driving".

Next, switching the navigation mode from the sail-powered driving mode to the engine/sail-powered driving mode will be described. When the navigation mode is switched from the "sail-powered driving" to the "engine/sail-powered driving 1" or the "engine/sail-powered driving 2" in FIG. 20, the control system 100 first releases the zero emission option, when the zero emission option is adopted during the sail-powered driving. When the mode is selected, the control system 100 activates the main engine 16. After the main engine 16 is set to the standby state, in a case of the "engine/sail-powered driving 2", the control system 100 changes the pitch angle of the front propeller 33 in accordance with the engine output. The control system 100 lowers the rotation speed of the rotor sail 31 in accordance with a wind condition. The control system 100 activates the rear propeller 37 to shift the navigation mode to the "engine/sail-powered driving". In addition, when the navigation mode is completely shifted from the "sail-powered driving" to the "engine/sail-powered driving", the control system 100 enables the crew to select whether or not to set the navigation mode to the "zero emission sail-powered driving" as an option in the "engine/sail-powered driving".

Next, switching the navigation mode from the sail-powered driving mode to the engine-powered driving mode will be described. When the navigation mode is switched from the "sail-powered driving" to the "engine-powered driving" in FIG. 20, the control system 100 switches the navigation mode via the engine/sail-powered driving mode ("engine/sail-powered driving 1" or "engine/sail-powered driving 2") on the system. In this case, since the switching is performed only via the engine/sail-powered driving mode on the system, there is no zero emission option. When the zero emission option is adopted during the sail-powered driving, the zero emission option is once released.

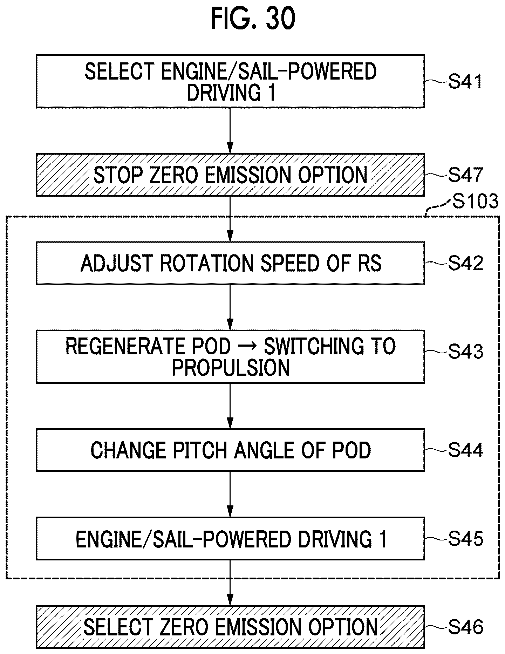

A step when the navigation mode is shifted from the "sail-powered driving" to the "engine/sail-powered driving 1" will be described with reference to FIG. 30. When the mode of the "engine/sail-powered driving 1" is selected in a case of the "sail-powered driving" mode as shown in a flowchart in FIG. 30 (Step S41), the control system 100 forcibly releases the zero emission option to switch the navigation mode (Step S47). Next, the control system 100 adjusts the rotation speed of the rotor sail 31, based on the relative wind direction and the relative wind speed (Step S42). The control system 100 switches the rear propeller 37 from the regeneration to the propulsion (Step S43). The control system 100 changes the pitch angle of the rear propeller 37, and starts using the rear propeller 37 for the propulsion (Step S44). In this manner, the control system 100 completely shifts the navigation mode to the "engine/sail-powered driving 1" (Step S45). The control system 100 determines whether or not the zero emission option can be used based on the relative wind direction and the relative wind speed, and enables the crew to select the zero emission option, when the zero emission option can be used (Step S46). When the zero emission option is not selected, the zero emission option is not used.

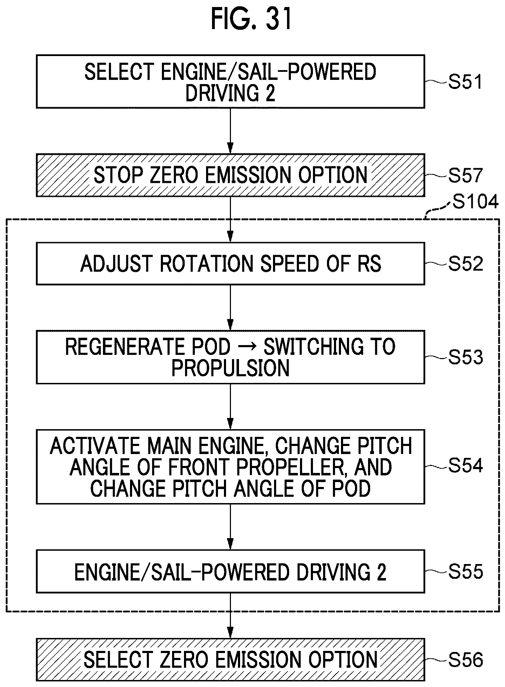

A step when the navigation mode is shifted from the "sail-powered driving" to the "engine/sail-powered driving 2" will be described with reference to FIG. 31. When the mode of the "engine/sail-powered driving **2"** is selected in a case of the "sail-powered driving" mode as shown in a flowchart in FIG. 31 (Step S51), the control system 100 forcibly releases the zero emission option to switch the navigation mode (Step S57). Next, the control system 100 adjusts the rotation speed of the rotor sail 31, based on the relative wind direction and the relative wind speed (Step S52). The control system 100 switches the rear propeller 37 from the regeneration to the propulsion (Step S53). The control system 100 activates the main engine 16, changes the pitch angle of the front propeller 33 in accordance with an accelerated speed after releasing the feathering of the front propeller 33, changes the pitch angle of the rear propeller 37 to an angle during the propulsion, and changes the rotation speed of the rear propeller 37 in accordance with the accelerated speed of the main engine 16 (Step S54). In this manner, the control system 100 completely shifts the navigation mode to the "engine/sail-powered driving **2"** (Step S55). The control system 100 determines whether or not the zero emission option can be used based on the relative wind direction and the relative wind speed, and enables the crew to select the zero emission option when the zero emission option can be used (Step S56). When the zero emission option is not selected, the zero emission option is not used.

When the navigation mode is switched from the "sail-powered driving" to the "engine-powered driving" via the "engine/sail-powered driving 1" in FIG. 20, the control system 100 first releases the zero emission option when the zero emission option is applied during the sail-powered driving. The control system 100 shifts the navigation mode from the "sail-powered driving" to the "engine/sail-powered driving 1". The control system 100 shifts the navigation mode from the "engine/sail-powered driving 1" to the "engine-powered driving". When the navigation mode is switched from the "sail-powered driving" to the "engine-powered driving" via the "engine/sail-powered driving 2" in FIG. 20, the control system 100 first releases the zero emission option when the zero emission option is applied during the sail-powered driving. The control system 100 shifts the navigation mode from the "sail-powered driving" to the "engine/sail-powered driving **2".** The control system 100 shifts the navigation mode from the "engine/sail-powered driving 2" to the "engine-powered driving".

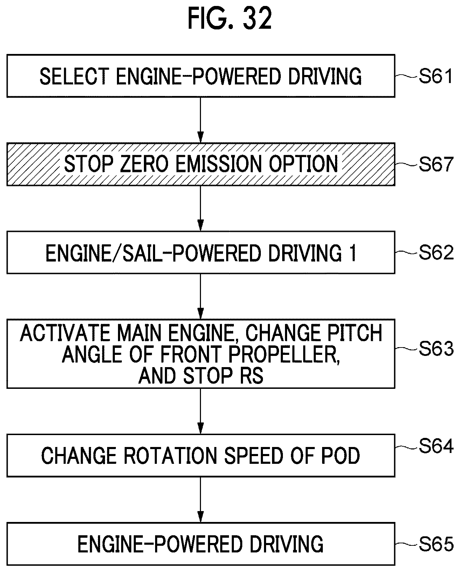

A step when the navigation mode is shifted from the "sail-powered driving" to the "engine-powered driving" will be described with reference to FIG. 32. When the mode of "engine-powered driving" is selected in a case of the "sail-powered driving" mode as shown in a flowchart in FIG. 32 (Step S61), the control system 100 forcibly releases the zero emission option to switch the navigation mode (Step S67). Next, the control system 100 performs a process of shifting the navigation mode to the "engine/sail-powered driving 1" (Step S103, refer to FIG. 30). The control system 100 activates the main engine 16, changes the pitch angle of the front propeller 33 in accordance with the accelerated speed after releasing the feathering of the front propeller 33, and stops the rotor sail 31 when the main engine 16 has the maximum output (Step S63). Next, the control system 100 changes the rotation speed of the rear propeller 37 in accordance with the rotation speed of the main engine 16 (Step S64). In this manner, the control system 100 completely shifts the navigation mode to the "engine-powered driving" (Step S65).

Next, operational effects of the control system 100 and the ship 1 according to the present embodiment will be described.

First, problems in the ship will be described. In the ship including the wind power propulsion unit and capable of sail-powered driving by completely stopping the propeller, the sail-powered driving mode, the engine/sail-powered driving mode, and the engine-powered driving mode are present as the navigation modes, and it is necessary to perform an operation to switch the navigation modes. Here, in the sail-powered driving mode, when the ship speed temporarily decreases, it takes time to recover the ship speed, which is inefficient. Therefore, precise steering is required. In particular, in the zero emission sail-powered driving mode involving the electric power regeneration, it is important to maintain the ship speed to secure required sufficient electric power. It is conceivable that the ship speed may decrease due to fluctuations in the wind or a turning motion or the like during the zero emission sail-powered driving mode. However, in this case, it is necessary to temporarily activate the propeller (to switch the navigation mode to the engine/sail-powered driving mode) to avoid a decrease in the ship speed or to steer the ship to recover the ship speed. There is a problem in that the crew is less likely to manually perform the operation for switching the navigation mode at a proper timing. In addition, even in danger avoidance steering during the sail-powered driving mode, it is necessary to urgently and reliably perform the operation for switching the navigation mode. In order to switch the navigation mode, it is necessary to collectively operate a wide variety of devices such as the wind power propulsion unit, the main engine (in some cases, the motor), the propeller (rotation speed/pitch angle control), a fuel pump, and a power supply system (power management system). Therefore, there is a problem of difficult steering. There are few crews who are familiar with the sail-powered driving, and it is required that even a sail-powered driving ship can be steered without special awareness.

In addition, in the ship that performs the sail-powered driving, it is required to comprehensively determine weather and sea conditions, a situation of a sea area, a situation where the ship is placed, fuel consumption, a schedule, an estimated time of arrival (ETA), or the like, or it is required to operate the ship by adjusting a sailing route or the ship speed to be used, based on emphasized items. In addition, it is necessary to pay attention to movements of other ships or a positional relationship with the other ships and to avoid a collision. Depending on the sea area, it is necessary to consider a nautical chart and to strive to prevent marine accidents such as running aground. That is, it is required to safely navigate the ship to a destination of the ship.

In addition, there is a problem related to a ship operator (crew). That is, in order to develop excellent steering skills and decision-making ability, abundant experience is required in addition to the knowledge. In some cases, safety of the operation depends on the skills of the ship operator. In this regard, the number of engine/sail-powered driving ships is still small, and there is a problem in that the number of experienced ship operators and experienced sailing persons of the engine/sail-powered driving ship is small. When a fully sail-powered driving ship is considered, the number of experienced ship operators and experienced sailing persons of the sailing ship is extremely small. For example, contents and levels of the skills required for a small sailing ship such as a yacht and a medium to large-sized sail-powered driving merchant ship are different. On the other hand, it is assumed that ultimate steering responsibility depends on persons. For the above-described reasons, it is necessary to provide a system in which even a crew who has insufficient knowledge about and insufficient experience in the sailing ship or the sail-powered driving can safely operate the sailing ship.

The ship operators have to consider various things, depending on the weather and sea conditions, the sea area, the skills of the crews, conditions of the ship, and the like. For example, in some cases, the ship operators may consider "the engine-powered driving since the operation is dangerous due to a rough weather", "the engine/sail-powered driving since the fully sail-powered driving is psychologically scary", "the sail-powered driving since the weather and sea conditions are satisfactory and there is no other ship", "the sail-powered driving since there is a margin in a schedule", "charging management of the battery for the sail-powered driving is troublesome", "reducing fuel consumption through the engine/sail-powered driving", "the zero emission sail-powered driving for the environment", "the engine-powered driving since the ship wants to arrive at a port in time", "the engine-powered driving since there are many shallow areas in this sea area", "the zero emission sail-powered driving for fuel saving", "the engine-powered driving or the engine/sail-powered driving since a veering point is close", "anxious about whether or not the operation of the sailing ship can be operated", and the like. In this regard, based on data analyzed on the own ship, a signal from the outside of the ship, or a signal from a weather routing system, it is required that the navigation mode is automatically switched as necessary and the ship operator can steer the ship without being aware of the sail. In addition, it is also required that the ship operator can manually switch the navigation mode in accordance with a situation.

According to the present embodiment, in order to solve the above-described problems, there is provided the control system 100 that controls the ship 1. As the navigation mode of the ship 1, the control system 100 includes the engine-powered driving mode in which the ship 1 is propelled only by the propulsor 12, the engine/sail-powered driving mode in which the ship 1 is propelled by the propulsor 12 and the wind power propulsion unit 10, and the sail-powered driving mode in which the ship 1 is propelled by the wind power propulsion unit 10. In contrast, the control system 100 automatically switches among the engine-powered driving mode, the engine/sail-powered driving mode, and the sail-powered driving mode. Therefore, regardless of the skills of the crews, the control system 100 can automatically switch the navigation mode at a proper timing or with a proper operation. According to the above-described configuration, the navigation mode can be easily switched.

The control system 100 may automatically switch among the engine-powered driving mode, the engine/sail-powered driving mode, and the sail-powered driving mode, based on wind conditions (for example, the wind speed, the wind direction, the wind power, and the like). In this manner, the control system 100 can automatically switch the navigation mode to a proper mode in accordance with the wind conditions.

As the sail-powered driving mode, the control system 100 may include the zero emission mode (first sail-powered driving mode) in which the fossil fuel is not used as the driving energy, and the non-zero emission mode (second sail-powered driving mode) in which the fossil fuel is used as the driving energy. In this case, the control system 100 can switch between the zero emission mode for environmental conservation and the non-zero emission mode for easy sailing in accordance with a situation. Specifically, the non-zero emission mode is the sail-powered driving mode using the fossil fuel. Therefore, the sail-powered driving and the engine/sail-powered driving can be performed while the wind power is used. Therefore, the ship can arrive at the destination earlier than in the zero emission mode. In the zero emission mode, the ship is propelled by renewable energy such as the electric power regenerated by the propeller. Therefore, the amount of carbon dioxide emission further decreases as much as the amount of the fossil fuel which is not used. As described above, even the sail-powered driving mode has the zero emission mode and the non-zero emission mode. In this manner, the sail-powered driving mode can be switched in accordance with the situation even in the mode in which the carbon dioxide emission is small.

As the switching mode for switching the navigation mode, the control system 100 may include the automatic mode for automatically switching the navigation mode, the manual mode for manually switching the navigation mode, the external input mode for switching the navigation mode in conjunction with the external system, and the emergency mode for forcibly switching the navigation mode to the manual engine-powered driving mode. In this manner, the control system 100 enables the sailing satisfying requests of the crews, and enables the sailing ensuring improved safety.

In the sail-powered driving mode, the automatic lamp 65 may be switched. In this case, it is possible to identify that the navigation mode is the sail-powered driving mode by using the automatic lamp 65, during the sail-powered driving mode in which the crew is less likely to control the traveling direction, compared to the engine-powered driving mode.

The control system 100 may restrict the sail-powered driving mode under a predetermined condition. In this case, since the crew is less likely to control the traveling direction in the sail-powered driving mode, compared to the engine-powered driving mode, safety can be improved by avoiding the sail-powered driving mode under conditions in which the sailing is preferable in the engine-powered driving mode or the engine/sail-powered driving mode in order to ensure the safety.

The ship 1 according to the present embodiment includes the above-described control system 100.

According to the ship 1, it is possible to obtain the same operational effects as those of the above-described control system 100.

As described above, the control system 100 according to the present embodiment can collectively perform the switching operation of the wind power propulsion unit 10, the main engine 16 (in some cases, the motor), the propeller, the management system 50, and the like in accordance with the navigation mode. In addition, the control system 100 can automatically switch the navigation mode by sensing an insufficient ship speed during the fully sail-powered driving. In addition, the control system 100 can adjust a thrust ratio of the wind power propulsion unit 10 and the propeller in a stepless manner so that the ship obtains a designated ship speed. In addition, the control system 100 can more reliably switch the navigation mode in an emergency with a simple operation, compared to the manual operation. Since the control system 100 including the above-described functions enables the crews to navigate the ship without causing the crews to be aware of the switching of the navigation mode, the control system 100 can reduce the burden on the crew and the risk caused by an erroneous operation or the like.

According to the control system 100 in the present embodiment, switching the navigation mode can be determined by a threshold such as the wind speed. Moreover, the outputs of the wind power propulsion unit 10 and the propeller can be freely controlled in accordance with performance requests such as a constant designated ship speed and the fuel economy priority (the above-described request mode). The control system 100 has a function of automatically switching the navigation mode, based on the designated ship speed, the optimal fuel economy, and the conditions. However, when the crew wants to intentionally switch the navigation mode, the crew can collectively issue commands in one device from the ship's bridge. The control system 100 can also automatically switch the navigation mode in conjunction with a steering control system mounted on the own ship, a weather routing system, or the like.

In addition, the control system 100 can also correspond to mode switching during the emergency steering. The navigation mode can be switched by operating a series of devices required for controlling the rotation speed of the propeller, the pitch angle of the propeller, and the rotation speed of the rotor sail. In the ship capable of electric power regeneration, it is possible to switch the navigation mode to the zero emission mode (driving with the regenerated electric power and the battery electric power) in accordance with the wind condition or the like. In addition, a command to charge the battery 40 can be issued as necessary. The control system 100 can also correspond to a tandem hybrid counter-rotating propeller, a normal propeller, or an azimuth propulsor. In addition, the control system 100 includes a display function of the navigation mode such that the current navigation mode can be recognized by the crew.

Furthermore, the crew uses the control system 100 according to the present embodiment to automate frequent operations for switching the navigation mode. Therefore, the burden of the crew can be reduced. In addition, subjective determination and the operations of the crews with respect to the performance requests such as the constant ship speed and the fuel economy priority are reduced, and thus, stability and economy are improved. The safety is improved by eliminating erroneous operations in the navigation mode switching operation. Switching for the engine/sail-powered driving as needed is automated to cope with wind fluctuation. Therefore, even crews having a little experience in the sail-powered driving enable the navigating as in a normal engine ship without being aware of the navigation mode. The crew no longer dislikes the frequent navigation mode switching operation to be avoided in a manual mode and the ship can be operated on an optimal sailing route.

The present invention is not limited to the above-described embodiment.

A structure of the hull 11 is not limited to that shown in FIG. 1, and may be appropriately changed depending on applications or the like. In the above-described embodiment, the rotor sail has been described as an example of the wind power propulsion unit. However, the wind power propulsion unit is not particularly limited as long as the wind power is used, and a hard sail, a cloth sail, a suction sail, or the like may be adopted.

### Brief Description of the Reference Symbols

1 ship
11 hull
10 wind power propulsion unit
12 propulsor
65 automatic lamp
100 control system

## Claims

1. A control system (100) that controls a ship (1),
wherein as a navigation mode of the ship (1), the control system (100) includes
an engine-powered driving mode in which the ship (1) is propelled only by a propulsor (12);
an engine/sail-powered driving mode in which the ship (1) is propelled by the propulsor (12) and a wind power propulsion unit (10); and
a sail-powered driving mode in which the ship (1) is propelled by the wind power propulsion unit (10), and
the control system (100) automatically switches among the engine-powered driving mode, the engine/sail-powered driving mode, and the sail-powered driving mode.

2. The control system (100) according to claim 1,
wherein the engine-powered driving mode, the engine/sail-powered driving mode, and the sail-powered driving mode are automatically switched, based on a wind condition.

3. The control system (100) according to claim 1,
wherein the sail-powered driving mode includes a first sail-powered driving mode in which a fossil fuel is not used as driving energy, and a second sail-powered driving mode in which the fossil fuel is used as the driving energy.

4. The control system (100) according to claim 1,
wherein as a switching mode for switching the navigation mode, the control system includes
an automatic mode for automatically switching the navigation mode,
a manual mode for manually switching the navigation mode,
an external input mode for switching the navigation mode in conjunction with an external system, and
an emergency mode for forcibly switching to a manual engine-powered driving mode.

5. The control system (100) according to claim 1,
wherein in the sail-powered driving mode, an automatic lamp (65) is switched.

6. The control system (100) according to claim 1,
wherein the sail-powered driving mode is restricted under a predetermined condition.

7. A ship (1) comprising:
the control system (100) according to any one of claims 1 to 6.
